# EUROPEAN PATENT APPLICATION

(11) **EP 3 487 260 A1**
(43) Date of publication of application: **22.05.2019**
(21) Application number: 16912275.1
(22) Date of filing: 11.08.2016
(51) Int. Cl.: H04W 88/04, H04W 76/10

(54) **LINK ESTABLISHMENT METHOD AND RELATED DEVICE**

(71) Applicant: Huawei Technologies Co., Ltd., Longgang District Shenzhen, Guangdong 518129 (CN)
(72) Inventor: MA, Jie, Shenzhen Guangdong 518129 (CN); LIN, Bo, Shenzhen Guangdong 518129 (CN)
(74) Representative: Maiwald Patent- und Rechtsanwaltsgesellschaft mbH
(86) International application number: PCT/CN2016/094711
(87) International publication number: WO 2018/027820

(57) **Abstract**

Embodiments of the present invention disclose a link establishment method and a related device, and the method includes: receiving, by a relay device over a stub link between the relay device and a remote device, a first access network protocol layer 2 message sent by the remote device; correspondingly generating a second access network protocol layer 2 message based on the first access network protocol layer 2 message, and sending the second access network protocol layer 2 message to a network-side device; receiving a third access network protocol layer 2 message that is returned by the network-side device in response to the second access network protocol layer 2 message; and correspondingly generating a fourth access network protocol layer 2 message based on the third access network protocol layer 2 message, and sending the fourth access network protocol layer 2 message to the remote device. An access network link between the remote device and the network-side device is established by using the relay device, so that when it is inconvenient for the remote device to directly communicate with the network-side device, the remote device can still successfully access the network-side device, thereby improving network access flexibility.

## Description

### TECHNICAL FIELD

The present invention relates to the field of communications technologies, and in particular, to a link establishment method and a related device.

### BACKGROUND

In the era of network communication, a user terminal, such as a wearable device (Wearable equipment, WE for short), is expected to access a network, to obtain more network services, and provide more functions for users.

Currently, when accessing a network, a terminal needs to attach attach to a subscribed network. After the attachment, the terminal obtains a network temporary identifier, and sets up an initial bearer from the terminal to a network-side device. However, in some scenarios, it is inconvenient for the terminal to directly set up an initial bearer to the network-side device. For example, when the terminal is located outside coverage of the network-side device that provides a network service, the terminal cannot be directly connected to the network-side device, and therefore the terminal cannot obtain the network service provided by the network-side device.

### SUMMARY

Embodiments of the present invention provide a link establishment method and a related device, so that a remote terminal can establish an access network link to a network-side device by using a relay device, thereby improving network access flexibility.

According to a first aspect, an embodiment of the present invention provides a link establishment method, and the method includes: receiving, by a relay device over a stub link between the relay device and a remote device, a first access network protocol layer 2 message sent by the remote device, where the first access network protocol layer 2 message is used to indicate that the remote device requests to establish an access network link between a network-side device and the remote device; correspondingly generating, by the relay device, a second access network protocol layer 2 message based on the first access network protocol layer 2 message, and sending the second access network protocol layer 2 message to the network-side device, where the second access network protocol layer 2 message is used to request the network-side device to establish the access network link; then, receiving, by the relay device, a third access network protocol layer 2 message that is returned by the network-side device in response to the second access network protocol layer 2 message, where the third access network protocol layer 2 message includes configuration information of a radio bearer between the remote device and the network-side device; and finally, correspondingly generating, by the relay device, a fourth access network protocol layer 2 message based on the third access network protocol layer 2 message, and sending the fourth access network protocol layer 2 message to the remote device, to establish the access network link between the remote device and the network-side device.

In the solution provided in this embodiment of the present invention, the access network link between the remote device and the network-side device is established by using the relay device, so that when it is inconvenient for the remote device to directly communicate with the network-side device, the remote device can still successfully access the network-side device, thereby improving network access flexibility. For example, when the remote device is located outside coverage of the network-side device, the remote device can establish the access network link to the network-side device by using the relay device.

Further, because the access network link between the remote device and the network-side device is established by using the relay device, the remote device only needs to perform physical communication with the relay device, thereby reducing transmit power of the remote device, and saving power of the remote device.

Further, because the network-side device establishes the access network link to the remote device by using the relay device, the remote device quickly establishes the link to the network device, so that a link establishment delay of the remote device is reduced, and signaling sent by the remote device is reduced, thereby actually reducing power consumption of the remote device.

In a possible design, the first access network protocol layer 2 message includes first indication information, the first indication information is used to identify the remote device, and the first indication information includes at least one of the following information:
an identifier of the remote device, a service type of the remote device, a group attribute of the remote device, and a device type or a device level of the remote device. The first indication information is carried in the first access network protocol layer 2 message, so that the relay device can identify, by using the first indication information, the remote device that sends the first access network protocol layer 2 message.

In an example, the first indication information may be a MAC address of the remote device (the MAC address is set by a hardware device vendor at delivery), an IP address of the remote device, and/or the like.

In a possible design, before the relay device correspondingly generates the second access network protocol layer 2 message based on the first access network protocol layer 2 message, the relay device further obtains the first indication information in the first access network protocol layer 2 message or stub radio link information, where the stub radio link information includes time domain or frequency domain physical information used to identify the remote device, a radio link identifier used to identify the remote device, and radio link protocol layer entity identifier information used to identify the remote device, so that the correspondingly generated second access protocol layer 2 message can also identify the remote device.

In a possible design, the second access network protocol layer 2 message includes second indication information, and the second indication information is used to indicate, to the network-side device, the remote device corresponding to the second access network protocol layer 2 message or indicate that the second access network protocol layer 2 message is used by the remote device to request the network-side device to establish the access network link.

In a possible design, the second indication information includes a data type of the second access network protocol layer 2 message and at least one of the following messages:
the identifier of the remote device, an identifier of the stub link between the relay device and the remote device, and a relay protocol processing entity identifier corresponding to the remote device. The second indication information is added to the second access network protocol layer 2 message, so that the network-side device can identify, by using the second indication message, the remote device that requests to establish the access network link.

In a possible design, the third access network protocol layer 2 message includes third indication information, and the third indication information is used to enable the relay device to determine the remote device corresponding to the configuration information of the radio bearer, so that when receiving radio bearer configuration returned by a network side, the relay device can determine the remote device based on a third indication message.

In a possible design, the third indication information includes the data type of the second access network protocol layer 2 message and at least one of the following messages:
the identifier of the remote device, the identifier of the stub link between the relay device and the remote device, and the relay protocol processing entity identifier corresponding to the remote device. All the foregoing identifiers can uniquely identify the remote device. Therefore, the remote device may be determined by using the foregoing identifiers.

In a possible design, the second access network protocol layer 2 message and/or the third access network protocol layer 2 message are/is sent by using a signaling radio bearer or a data radio bearer between the relay device and the network-side device.

In a possible design, the fourth access network protocol layer 2 message includes a cell temporary radio identifier of the remote device.

In a possible design, the relay device obtains one or more cell temporary radio identifiers from the network-side device, so that the relay device allocates one of the one or more cell temporary radio identifiers to the remote device. In this way, the relay device can actively obtain the cell temporary radio identifier from the network-side device, so that an implementation process in which the remote device accesses the network-side device by using the relay device is more flexible.

In one example, the relay UE informs the remote device of the allocated cell temporary radio identity by using the stub link.

In a possible design, the first access network protocol layer 2 message is an RLC PDU, a MAC DPU, or a PDCP PDU, the second access network protocol layer 2 message is an RLC PDU, a MAC DPU, or a PDCP PDU, the third access network protocol layer 2 message is an RLC PDU, a MAC DPU, or a PDCP PDU, and the fourth access network protocol layer 2 message is an RLC PDU, a MAC DPU, or a PDCP PDU. Different message types are used for sending, so that a message sending manner is more flexible.

In a possible design, before the relay device sends the second access network protocol layer 2 message to the network-side device, the relay device sends a fourth signaling radio bearer setup request to the network-side device, and then the relay device receives fourth signaling radio bearer configuration information returned by the network-side device, so that the relay device sends the second access network protocol layer 2 message to the network-side device by using a fourth signaling radio bearer generated based on the fourth signaling radio bearer configuration information. The fourth signaling radio bearer is first set up, so that the subsequent second access network protocol layer 2 message can be sent by using the fourth signaling radio bearer.

In another possible design, before the relay device sends the second access network protocol layer 2 message to the network-side device, the relay device receives fourth signaling radio bearer configuration information that is returned by the network-side device in response to the second access network protocol layer 2 message. When the second access network protocol layer 2 message is sent, the network-side device returns the fourth signaling radio bearer configuration information, and sets up a fourth signaling radio bearer. In this way, the fourth signaling radio bearer is set up flexibly.

According to a second aspect, an embodiment of the present invention provides a link establishment method, and the method includes: receiving, by a network-side device, a second access network protocol layer 2 message sent by a relay device, where the second access network protocol layer 2 message is used to request the network-side device to establish an access network link between the network-side device and a remote device; and then, sending, by the network-side device, a third access network protocol layer 2 message to the relay device in response to the second access network protocol layer 2 message, where the third access network protocol layer 2 message includes configuration information of a radio bearer between the remote device and the network-side device.

In the solution provided in this embodiment of the present invention, the access network link between the remote device and the network-side device is established by using the relay device, so that when it is inconvenient for the remote device to directly communicate with the network-side device, the remote device can still successfully access the network-side device, thereby improving network access flexibility. For example, when the remote device is located outside coverage of the network-side device, the remote device can establish the access network link to the network-side device by using the relay device.

Further, because the access network link between the remote device and the network-side device is established by using the relay device, the remote device only needs to perform physical communication with the relay device, thereby reducing transmit power of the remote device, and saving power of the remote device.

Further, because the network-side device establishes the access network link to the remote device by using the relay device, the remote device quickly establishes the link to the network device, so that a link establishment delay of the remote device is reduced, and signaling sent by the remote device is reduced, thereby actually reducing power consumption of the remote device.

In a possible design, the third access network protocol layer 2 message includes third indication information, and the third indication information is used to enable the relay device to determine the remote device corresponding to the configuration information of the radio bearer, so that when receiving radio bearer configuration returned by a network side, the relay device can determine the remote device based on a third indication message.

In a possible design, the third indication information includes a data type of the second access network protocol layer 2 message and at least one of the following messages:
an identifier of the remote device, an identifier of a stub link between the relay device and the remote device, and a relay protocol processing entity identifier corresponding to the remote device. All the foregoing identifiers can uniquely identify the remote device. Therefore, the remote device may be determined by using the foregoing identifiers.

In a possible design, the second access network protocol layer 2 message and/or the third access network protocol layer 2 message are/is sent by using a signaling radio bearer or a data radio bearer between the relay device and the network-side device.

In a possible design, the network-side device sends one or more cell temporary radio identifiers to the relay device, so that the relay device allocates one of the one or more cell temporary radio identifiers to the remote device. In this way, the access network link between the remote device and the network-side device can be successfully established.

In a possible design, the second access network protocol layer 2 message is an RLC PDU, a MAC DPU, or a PDCP PDU, and the third access network protocol layer 2 message is an RLC PDU, a MAC DPU, or a PDCP PDU. Different message types are used for sending, so that a message sending manner is more flexible.

According to a third aspect, an embodiment of the present invention provides a link establishment method, and the method includes: sending, by a remote device, a first access network protocol layer 2 message to a relay device over a stub link between the remote device and the relay device, where the first access network protocol layer 2 message is used to indicate that the remote device requests to establish an access network link between a network-side device and the remote device; and receiving, by the remote device, a fourth access network protocol layer 2 message returned by the network-side device, where the fourth access network protocol layer 2 message is correspondingly generated based on a third access network protocol layer 2 message, and the third access network protocol layer 2 message includes configuration information of a radio bearer between the remote device and the network-side device.

In the solution provided in this embodiment of the present invention, the access network link between the remote device and the network-side device is established by using the relay device, so that when it is inconvenient for the remote device to directly communicate with the network-side device, the remote device can still successfully access the network-side device, thereby improving network access flexibility. For example, when the remote device is located outside coverage of the network-side device, the remote device can establish the access network link to the network-side device by using the relay device.

Further, because the access network link between the remote device and the network-side device is established by using the relay device, the remote device only needs to perform physical communication with the relay device, thereby reducing transmit power of the remote device, and saving power of the remote device.

Further, because the network-side device establishes the access network link to the remote device by using the relay device, the remote device quickly establishes the link to the network device, so that a link establishment delay of the remote device is reduced, and signaling sent by the remote device is reduced, thereby actually reducing power consumption of the remote device.

In a possible design, the first access network protocol layer 2 message includes first indication information, the first indication information is used to identify the remote device, and the first indication information includes at least one of the following information:
an identifier of the remote device, a service type of the remote device, a group attribute of the remote device, and a device type or a device level of the remote device. The first indication information is carried in the first access network protocol layer 2 message, so that the relay device can identify, by using the first indication information, the remote device that sends the first access network protocol layer 2 message.

In a possible design, the remote device obtains a cell temporary radio identifier of the remote device by using the fourth access network protocol layer 2 message, and the fourth access network protocol layer 2 message includes the cell temporary radio identifier. The remote device actively obtains the cell temporary radio identifier of the remote device, so that access assurance is improved in a process of establishing the access network link between the remote device and the network-side device.

In a possible design, the first access network protocol layer 2 message is an RLC PDU, a MAC DPU, or a PDCP PDU, the third access network protocol layer 2 message is an RLC PDU, a MAC DPU, or a PDCP PDU, and the fourth access network protocol layer 2 message is an RLC PDU, a MAC DPU, or a PDCP PDU. Different message types are used for sending, so that a message sending manner is more flexible.

According to a fourth aspect, an embodiment of the present invention provides a link establishment method, and the method includes: receiving, by a relay device, an access network protocol layer 2 message sent by a network-side device, where the access network protocol layer 2 message is used to establish an access network link between the network-side device and a remote device, and the access network protocol layer 2 message includes configuration information of a radio bearer between the remote device and the network-side device; and then, sending, by the relay device, radio bearer configuration to the remote device over a radio link between the relay device and the remote device based on the access network protocol layer 2 message.

In the solution provided in this embodiment of the present invention, when the network-side device pre-stores a stub link mapping relationship between the remote device and the relay device, the remote device does not need to send an access request to the network-side device, and the network-side device actively sends the configuration information of the radio bearer to the remote device by using the relay device to establish the access network link between the remote device and the network-side device, so that in this scenario, a process of establishing the access network link between the network-side device and the remote device is more simple.

Further, because the access network link between the remote device and the network-side device is established by using the relay device, the remote device only needs to perform physical communication with the relay device, thereby reducing transmit power of the remote device, and saving power of the remote device.

Further, because the network-side device establishes the access network link to the remote device by using the relay device, the remote device quickly establishes the link to the network device, so that a link establishment delay of the remote device is reduced, and signaling sent by the remote device is reduced, thereby actually reducing power consumption of the remote device.

In a possible design, the access network protocol layer 2 message includes fifth indication information, and the fifth indication information is used to enable the relay device to determine the remote device corresponding to the configuration information of the radio bearer, so that when receiving the radio bearer configuration returned by a network side, the relay device can determine the remote device based on a third indication message.

In a possible design, the fifth indication information includes a data type of a second access network protocol layer 2 message and at least one of the following messages:
an identifier of the remote device, an identifier of a stub link between the relay device and the remote device, and a relay protocol processing entity identifier corresponding to the remote device. All the foregoing identifiers can uniquely identify the remote device. Therefore, the remote device may be determined by using the foregoing identifiers.

In a possible design, the second access network protocol layer 2 message is sent by using a signaling radio bearer or a data radio bearer between the relay device and the network-side device.

In a possible design, the second access network protocol layer 2 message is an RLC PDU, a MAC DPU, or a PDCP PDU.

In a possible design, the relay device obtains one or more cell temporary radio identifiers from the network-side device, so that the relay device allocates one of the one or more cell temporary radio identifiers to the remote device. In this way, the relay device can actively obtain the cell temporary radio identifier from the network-side device, so that an implementation process in which the remote device accesses the network-side device by using the relay device is more flexible.

According to a fifth aspect, an embodiment of the present invention provides a link establishment method, and the method includes: sending, by a network-side device, an access network protocol layer 2 message to a relay device, where the access network protocol layer 2 message is used to establish an access network link between the network-side device and a remote device, and the access network protocol layer 2 message includes configuration information of a radio bearer between the remote device and the network-side device.

In the solution provided in this embodiment of the present invention, when the network-side device pre-stores a stub link mapping relationship between the remote device and the relay device, the remote device does not need to send an access request to the network-side device, and the network-side device actively sends the configuration information of the radio bearer to the remote device by using the relay device to establish the access network link between the remote device and the network-side device, so that in this scenario, a process of establishing the access network link between the network-side device and the remote device is more simple.

Further, because the access network link between the remote device and the network-side device is established by using the relay device, the remote device only needs to perform physical communication with the relay device, thereby reducing transmit power of the remote device, and saving power of the remote device.

Further, because the network-side device establishes the access network link to the remote device by using the relay device, the remote device quickly establishes the link to the network device, so that a link establishment delay of the remote device is reduced, and signaling sent by the remote device is reduced, thereby actually reducing power consumption of the remote device.

In a possible design, the access network protocol layer 2 message includes fifth indication information, and the fifth indication information is used to enable the relay device to determine the remote device corresponding to the configuration information of the radio bearer, so that when receiving the radio bearer configuration returned by a network side, the relay device can determine the remote device based on a third indication message.

In a possible design, the fifth indication information includes a data type of a second access network protocol layer 2 message and at least one of the following messages:
an identifier of the remote device, an identifier of a stub link between the relay device and the remote device, and a relay protocol processing entity identifier corresponding to the remote device. All the foregoing identifiers can uniquely identify the remote device. Therefore, the remote device may be determined by using the foregoing identifiers.

In a possible design, the second access network protocol layer 2 message is sent by using a signaling radio bearer or a data radio bearer between the relay device and the network-side device.

In a possible design, the second access network protocol layer 2 message is an RLC PDU, a MAC DPU, or a PDCP PDU.

In a possible design, the network-side device sends one or more cell temporary radio identifiers to the relay device, so that the relay device allocates one of the one or more cell temporary radio identifiers to the remote device. In this way, when the network-side device pre-stores the stub link mapping relationship between the remote device and the relay device, the network-side device actively sends the cell temporary radio identifier to the relay device, so that it is more convenient to establish the access network link between the remote device and the network-side device.

In a possible design, before the network-side device sends the access network protocol layer 2 message to the relay device, the network-side device further obtains a correspondence between the relay device and the remote device, and the correspondence is used to instruct the relay device to perform wireless communication with the remote device. In this way, a message sending path is more accurate.

According to a sixth aspect, an embodiment of the present invention provides a link selection method, and the method includes: obtaining, by a non-access stratum NAS stratum of a remote device, link selection result information according to indication information, and sending the link selection result information to an access stratum AS stratum, so that the AS stratum determines, based on the link selection result information, whether to establish an access network link to a network-side device by using a relay device; or determining, by an AS stratum according to indication information, whether to establish an access network link to a network-side device by using a relay device.

In this embodiment of the present invention, because the indication information may reflect a data link requirement of the remote device, a manner of establishing a link by the remote device is determined by using the indication information. A link selection result obtained in this determining manner accurately reflects an access requirement of the remote device. Further, the AS stratum determines the link selection result according to the indication information, or the NAS stratum obtains the link selection result according to the indication information and then sends the link selection result to the AS stratum, so that a link selection manner is more flexible, and therefore service experience of a user can be further improved.

In a possible design, the indication information includes at least one of the following: EMM registration information, internal setting information, communications entity status information, and data sending requirement information. Because these pieces of indication information can accurately reflect a communication status of the remote device, the link selection result may be determined by using the indication information, so that the obtained result meets a requirement.

In an example, the EMM registration information includes an EMM registered state or an EMM unregistered state; the internal setting information includes a power saving mode and a non-power saving mode; the communications entity layer status information includes out-of-service, an ECM registered state, an ECM unregistered state, an MM idle state, or an MM connected state; and the data sending requirement information includes quality of service QoS information and data type information, and the data type information includes an incoming call, an outgoing call, and an emergency call.

In one example, when at least one of the following indication information is met, it is determined that the remote device establishes an initial link to the network-side device by using the relay device:
the EMM registration information is the EMM unregistered state, the internal setting information is the power saving mode, the communications entity status information is out-of-service, the data type information is an incoming call, the data type information is an outgoing call, and the data type information is an emergency call; or
if the data type information is an outgoing call, an outgoing call, or an emergency call, and the communications entity layer status information is the ECM registered state, it is determined that the remote device establishes an initial link to the network-side device by using the relay device.

According to a seventh aspect, an embodiment of the present invention provides a relay device, and the relay device has a function of implementing the first aspect. The function may be implemented by using hardware, or may be implemented by executing corresponding software by hardware. The hardware or the software includes one or more modules corresponding to the function.

In a possible design, the relay device includes a processor, a receiver, and a transmitter, and the processor is configured to support this terminal in performing corresponding functions in the foregoing method. The receiver and the transmitter are configured to support communication between the terminal and a base station. Further, the relay device may further include a memory, the memory is configured to be coupled to the processor, and the memory stores a program instruction and data that are necessary to the terminal.

According to an eighth aspect, an embodiment of the present invention provides a network-side device, and the network-side device has a function of implementing the second aspect. The function may be implemented by using hardware, or may be implemented by executing corresponding software by hardware. The hardware or the software includes one or more modules corresponding to the function.

In a possible design, the network-side device may be a base station, or may be another network node, for example, a serving GPRS support node, a mobility management entity, a network entity at a non-access stratum, or a network entity of a Radio Resource Control layer.

In a possible design, when the network-side device is a base station, a structure of the base station includes a processor, a transmitter, and a receiver, and the processor is configured to support the base station in performing corresponding functions in the foregoing method. The receiver and the transmitter are configured to support communication between the base station and a terminal. The base station may further include a memory, the memory is configured to be coupled to the processor, and the memory stores a program instruction and data that are necessary to the base station.

According to a ninth aspect, an embodiment of the present invention provides a remote device, and this terminal has a function of implementing the third aspect. The function may be implemented by using hardware, or may be implemented by executing corresponding software by hardware. The hardware or the software includes one or more modules corresponding to the function.

In a possible design, the remote device includes a processor, a receiver, and a transmitter, and the processor is configured to support this terminal in performing corresponding functions in the foregoing method. The receiver and the transmitter are configured to support communication between the terminal and a base station. Further, the remote device may further include a memory, the memory is configured to be coupled to the processor, and the memory stores a program instruction and data that are necessary to the terminal.

According to a tenth aspect, an embodiment of the present invention provides a relay device, and the relay device has a function of implementing the fourth aspect. The function may be implemented by using hardware, or may be implemented by executing corresponding software by hardware. The hardware or the software includes one or more modules corresponding to the function.

In a possible design, the relay device includes a processor, a receiver, and a transmitter, and the processor is configured to support this terminal in performing corresponding functions in the foregoing method. The receiver and the transmitter are configured to support communication between the terminal and a base station. Further, the relay device may further include a memory, the memory is configured to be coupled to the processor, and the memory stores a program instruction and data that are necessary to the terminal.

According to an eleventh aspect, an embodiment of the present invention provides a network-side device, and the network-side device has a function of implementing the fifth aspect. The function may be implemented by using hardware, or may be implemented by executing corresponding software by hardware. The hardware or the software includes one or more modules corresponding to the function.

In a possible design, the network-side device may be a base station, or may be another network node, for example, a serving GPRS support node, a mobility management entity, a network entity at a non-access stratum, or a network entity of a Radio Resource Control layer.

In a possible design, when the network-side device is a base station, a structure of the base station includes a processor, a transmitter, and a receiver, and the processor is configured to support the base station in performing corresponding functions in the foregoing method. The receiver and the transmitter are configured to support communication between the base station and a terminal. The base station may further include a memory, the memory is configured to be coupled to the processor, and the memory stores a program instruction and data that are necessary to the base station.

According to a twelfth aspect, an embodiment of the present invention provides a remote device, and this terminal has a function of implementing the sixth aspect. The function may be implemented by using hardware, or may be implemented by executing corresponding software by hardware. The hardware or the software includes one or more modules corresponding to the function.

In a possible design, the remote device includes a processor, a receiver, and a transmitter, and the processor is configured to support this terminal in performing corresponding functions in the foregoing method. The receiver and the transmitter are configured to support communication between the terminal and a base station. Further, the remote device may further include a memory, the memory is configured to be coupled to the processor, and the memory stores a program instruction and data that are necessary to the terminal.

According to a thirteenth aspect, an embodiment of the present invention provides a link establishment system, and the system includes the relay device, the network-side device, and the remote device in the foregoing aspects.

According to a fourteenth aspect, an embodiment of the present invention provides a computer storage medium, configured to store a computer software instruction used by the relay device in the seventh aspect, and the computer software instruction includes a program designed for executing the foregoing aspect.

According to a fifteenth aspect, an embodiment of the present invention provides a computer storage medium, configured to store a computer software instruction used by the network-side device in the eighth aspect, and the computer software instruction includes a program designed for executing the foregoing aspect.

According to a sixteenth aspect, an embodiment of the present invention provides a computer storage medium, configured to store a computer software instruction used by the remote device in the ninth aspect, and the computer software instruction includes a program designed for executing the foregoing aspect.

According to a seventeenth aspect, an embodiment of the present invention provides a computer storage medium, configured to store a computer software instruction used by the relay device in the tenth aspect, and the computer software instruction includes a program designed for executing the foregoing aspect.

According to an eighteenth aspect, an embodiment of the present invention provides a computer storage medium, configured to store a computer software instruction used by the network-side device in the eleventh aspect, and the computer software instruction includes a program designed for executing the foregoing aspect.

According to a nineteenth aspect, an embodiment of the present invention provides a computer storage medium, configured to store a computer software instruction used by the remote device in the twelfth aspect, and the computer software instruction includes a program designed for executing the foregoing aspect.

In comparison with the prior art, in the solution provided in the embodiments of the present invention, the access network link between the remote device and the network-side device is established by using the relay device, so that when it is inconvenient for the remote device to directly communicate with the network-side device, the remote device can still successfully access the network-side device, thereby improving network access flexibility. For example, when the remote device is located outside coverage of the network-side device, the remote device can establish the access network link to the network-side device by using the relay device.

Further, because the access network link between the remote device and the network-side device is established by using the relay device, the remote device only needs to perform physical communication with the relay device, thereby reducing transmit power of the remote device, and saving power of the remote device.

Further, because the network-side device establishes the access network link to the remote device by using the relay device, the remote device quickly establishes the link to the network device, so that a link establishment delay of the remote device is reduced, and signaling sent by the remote device is reduced, thereby actually reducing power consumption of the remote device.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show merely some embodiments of the present invention, and persons of ordinary skill in the art may derive other drawings from these accompanying drawings without creative efforts.

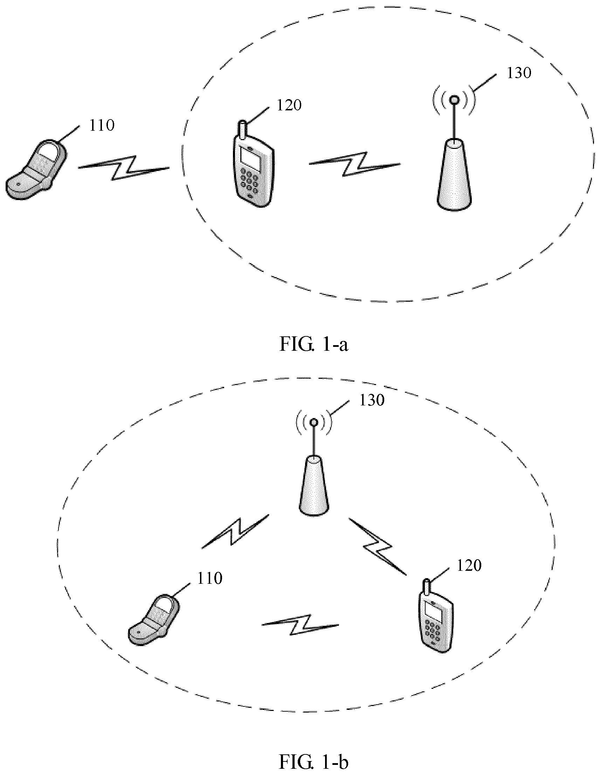

FIG. 1-a is a network architecture diagram of a link establishment system according to an embodiment of the present invention;
FIG. 1-b is a network architecture diagram of another link establishment system according to an embodiment of the present invention;
FIG. 2 is a schematic structural diagram of a protocol stack according to an embodiment of the present invention;
FIG. 3 is a schematic flowchart of an embodiment of a link establishment method according to an embodiment of the present invention;
FIG. 4 is a schematic flowchart of another link establishment method according to an embodiment of the present invention;
FIG. 5 is a schematic structural diagram of a relay device according to an embodiment of the present invention;
FIG. 6 is a schematic structural diagram of another relay device according to an embodiment of the present invention;
FIG. 7 is a schematic structural diagram of a network-side device according to an embodiment of the present invention;
FIG. 8 is a schematic structural diagram of another network-side device according to an embodiment of the present invention;
FIG. 9 is a schematic structural diagram of a remote device according to an embodiment of the present invention;
FIG. 10 is a schematic structural diagram of another remote device according to an embodiment of the present invention;
FIG. 11 is a schematic structural diagram of a relay device according to an embodiment of the present invention;
FIG. 12 is a schematic structural diagram of another relay device according to an embodiment of the present invention;
FIG. 13 is a schematic structural diagram of a network-side device according to an embodiment of the present invention;
FIG. 14 is a schematic structural diagram of another network-side device according to an embodiment of the present invention;
FIG. 15 is a schematic structural diagram of a remote device according to an embodiment of the present invention; and
FIG. 16 is a schematic structural diagram of another remote device according to an embodiment of the present invention.

### DESCRIPTION OF EMBODIMENTS

Embodiments of the present invention provide a link establishment method and a related device, so that a remote terminal can establish an access network link to a network-side device by using a relay device, thereby improving network access flexibility.

To make persons skilled in the art understand the technical solutions in the present invention better, the following clearly and completely describes the technical solutions in the embodiments of the present invention with reference to the accompanying drawings in the embodiments of the present invention. Apparently, the described embodiments are merely some rather than all of the embodiments of the present invention. All other embodiments obtained by persons of ordinary skill in the art based on the embodiments of the present invention without creative efforts shall fall within the protection scope of the present invention.

In the specification, claims, and accompanying drawings of the present invention, the terms "first", "second", "third", and so on are intended to distinguish between different objects but do not indicate a particular order. In addition, the term "include or any other variant thereof is intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

Mentioning an "embodiment" in the specification means that a particular characteristic, structure, or feature described with reference to the embodiment may be included in at least one embodiment of the present invention. The phrase shown in various locations in the specification may not necessarily refer to a same embodiment, and is not an independent or optional embodiment exclusive from another embodiment. It is explicitly and implicitly understood by persons skilled in the art that the embodiments described in the specification may be combined with another embodiment.

First, FIG. 1-a is a network architecture diagram of a link establishment system according to an embodiment of the present invention, and FIG. 1-b is a network architecture diagram of another link establishment system according to an embodiment of the present invention. A link establishment method and a link selection method provided in the embodiments of the present invention may be performed based on the two network architecture diagrams. A first network architecture shown in FIG. 1-a includes a remote device 110, a relay device 120, and a network-side device 130. The relay device 120 is a device that can directly access the network-side device 130 to communicate with the network side-device 130, and is configured to forward data and/or signaling of the remote device to a device in a mobile communications network, or forward data and/or signaling from the network-side device 130 to the remote device 110. The remote device 110 may be relatively far away from the network-side device 130, and is located outside network coverage of the network-side device 130, and therefore cannot directly establish a communication connection to the network-side device 130. However, a connection can be directly established between the remote device 110 and the relay device 120. For example, a link may be established between the remote device 110 and the relay device 120 by using a Bluetooth low energy (Bluetooth low energy, BLE for short) technology or a wireless technology Wi-Fi, so that the remote device 110 may establish an access network link to the network-side device 130 by using the relay device 120, to transmit uplink or downlink data.

Specifically, the remote device 110 may be user equipment (User Equipment, UE for short) such as a mobile phone or a wearable device (Wearable Equipment, WE for short). The relay device 120 may be a communications terminal such as a mobile phone or a wearable device. The network-side device 130 may be a network-side device that provides a network access resource, such as an evolved NodeB (evolved NodeB, eNodeB for short).

In the network architecture shown in FIG. 1-b, different from that in FIG. 1-a, the remote device 110 is located within network coverage of the network-side device 130, in other words, the remote device 110 can directly establish a network communication connection to the network-side device 130, but when the remote device 110 directly accesses a network service provided by the network-side device 130, relatively large transmit power is required. Because the remote device 110 is usually a wearable device with a relatively small battery capacity, operations of the remote device 110 need to be low power consumption. When the remote device 110 communicates with the relay device 120, required transmit power is relatively small. Therefore, to save power of the remote device 110, in the second network architecture, the remote device 110 may establish an access network link to the network-side device 130 by using the relay device 120, to transmit uplink or downlink data.

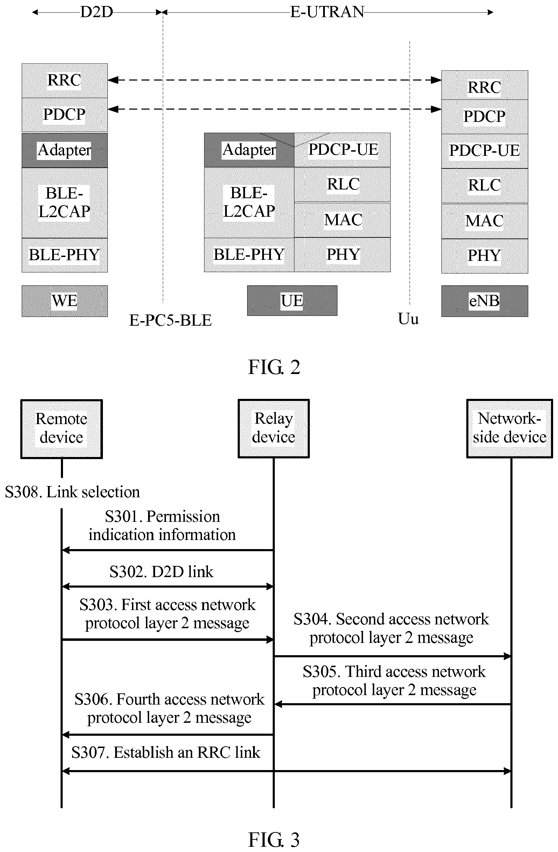

FIG. 2 is a schematic structural diagram of a protocol stack according to an embodiment of the present invention. The protocol stack is a control plane protocol stack between a remote device, a relay device, and a network-side device. Both a link establishment method and a link selection method provided in the embodiments of the present invention are implemented based on this protocol stack structure.

In a control plane protocol stack structure shown in FIG. 2, there are a Radio Resource Control (Radio Resource Control, RRC for short) layer and a Packet Data Convergence Protocol (Packet Data Convergence Protocol, PDCP for short) layer that are peer to peer between the remote device and the network-side device. The RRC layer is responsible for managing parameter configuration of an access link of the remote device, setting up a bearer (including an accessed radio bearer and a bearer from the network-side device to a core network) of the remote device, and configuring a security parameter used by the remote device to transmit data and signaling.

Based on the protocol stack shown in FIG. 2, for a mobility processing entity (Mobility Management Entity, MME for short), a serving gateway (Serving Gateway, SGW for short), and a PDN gateway (PDN Gateway, PGW for short) in the core network, WE is directly linked to an eNB by using a Uu interface, and WE management in the core network is the same as that when no relay UE is used, so that compatibility of the core network can be maintained. If the WE is relatively far away from the relay UE, when the WE is directly linked to the eNB by using the Uu interface, the eNB still keeps context of the WE, so that a service data transfer capability can be quickly restored, and a mobility processing procedure is simple and has a short delay.

In such a protocol stack, for the eNB, data uploaded or downloaded by RRC of the WE, especially a security parameter, is directly managed by the eNB, and a signaling and data transmission integrity protection process and encryption and decryption processes are all completed by the WE and a PDCP layer of the eNB. This ensures that when the WE uses any relay UE, signaling and/or data transmission from the WE to the eNB are/is secure and reliable, because the relay UE cannot decrypt the data of the WE.

In the protocol stack architecture provided in this embodiment of the present invention, an interface between the relay UE and the WE may be D2D in Long Term Evolution (Long Term Evolution, LTE for short), a Bluetooth technology, a Wi-Fi technology, or another wireless technology in which terminals directly communicate with each other.

FIG. 3 is a schematic flowchart of an embodiment of a link establishment method according to an embodiment of the present invention. As shown in FIG. 3, the method may include the following steps.

S301. A relay device sends permission indication information to a remote device, to notify the remote UE that the relay device has permissions of relay UE.

In this embodiment of the present invention, after the remote UE monitors the indication information, the remote UE chooses to establish an initial link to a network-side device by using the relay UE.

Specifically, the relay UE may send a synchronization signal or broadcast information, and the broadcast information is used by the remote device WE to find that the remote device can access a cellular network by using the relay UE.

Specifically, content of the broadcast information includes a public land mobile network (Public Land Mobile Network, PLMN for short) identifier, a cell ID, and a UE ID, and further includes a tracking area (Tracking area, TA for short) or a TA list of a cell in which the relay UE is located.

The PLMN identifier is an identifier of a network on which the relay UE camps, for example, China Mobile, and is used to indicate a mobile network that the remote device can access by using the relay UE. The cell ID is an identifier of a cell that the relay UE (relay UE) currently camps on or that the relay UE is currently served by. The UE ID is an identifier that is allocated by a base station or a core network device in the cellular network to the relay UE. The TA is a tracking area of the cell that the relay UE currently camps on or that the relay UE is currently served by.

Further, the broadcast information may further include an IP address of the base station in the cellular network.

Even further, upper-layer protocol type indication information code required by a Bluetooth or Wi-Fi technology is broadcast in the broadcast information, and the code is a protocol type used to notify a receive end and a transmit end to identify a data packet.

Optionally, the broadcast information is sent on a Bluetooth (Bluetooth, BT for short), BLE, or Wi-Fi broadcast channel.

Optionally, the broadcast information may alternatively be sent by using another wireless technology that can be used by both the remote device and the relay device.

Optionally, further, before step S301, the relay device sends authentication to the network-side device, and obtains authorization from the network-side device.

In this embodiment of the present invention, when an RRC layer of the remote device receives indication information or a signaling data packet from an upper layer, if the indication information or the signaling data packet indicates that an access network link between the remote device and the network-side device needs to be established by using the relay device, the remote device establishes the access network link to the network-side device by using the relay device that has relay permissions.

Specifically, in this embodiment of the present invention, the relay device first needs to perform authentication with the network-side device, to become relay UE that can be used by the remote UE to establish an RRC link between the remote device and the network-side device.

S302. Establish a point-to-point stub link between the remote device and the relay device.

The point-to-point stub link is a communication connection used for communication between the remote device and the relay device. Specifically, the point-to-point stub link may be a D2D link, and a preconfigured profile is used to meet transmission of some initial RRC signaling.

Specifically, the D2D link may be a Bluetooth link BT link, and a profile in the Bluetooth link includes at least a Bluetooth core protocol data transmission protocol L2CAP configuration parameter of the BT link of the WE, a supported upper-layer protocol type, and corresponding indication information.

S303. The remote device sends, over the stub link between the remote device and the relay device, a first access network protocol layer 2 message to the relay device, where the first access network protocol layer 2 message is used to indicate that the remote device requests to establish an access network link between a network-side device and the remote device.

In this case, the relay device receives, over the stub link between the relay device and the remote device, the first access network protocol layer 2 message sent by the remote device, and the first access network protocol layer 2 message is used to indicate that the remote device requests to establish the access network link between the network-side device and the remote device.

Optionally, the first access network protocol layer 2 message includes first indication information, the first indication information is used to identify the remote device, and the first indication information includes a data type of the first access network protocol layer 2 message and at least one of the following information:
an identifier of the remote device, a service type of the remote device, a group attribute of the remote device, and a device type or a device level of the remote device.

The data type of the first access network protocol layer 2 message is used to indicate that the message is signaling data or service data, and the service data may be session-type service data, flow-type service data, interaction-type service data, or background-type service data.

Optionally, the first indication information used to identify the remote device may alternatively be a MAC address of the remote device (the MAC address is set by a hardware device vendor at delivery), an IP address of the remote device, and/or the like.

Optionally, the first indication information may alternatively be other information used to identify the remote device.

It may be understood that the first indication information is carried in the first access network protocol layer 2 message, so that the relay device can identify, by using the first indication information, the remote device WE that sends the first access network protocol layer 2 message.

Specifically, the remote device WE generates the first access network protocol layer 2 message, namely, an RRC connection request message, and adds an ID of the remote device, to be specific, a temporary mobile subscriber identity (Temporary Mobile Subscriber Identity, TMSI for short) or an international mobile subscriber identity (international mobile subscriber identity, IMSI for short), to an adapter layer, a Packet Data Convergence Protocol (Packet Data Convergence Protocol, PDCP for short) layer, or a Radio Link Control (Radio Link Control, RLC for short) layer. The TMSI is used when the WE has performed initial attachment, and the IMSI is used before the initial attachment is performed.

Specifically, when configuration of the adapter layer requires adding of an RBID, a header whose RBID is 0 is added, to indicate that this data packet transferred to a BT bottom layer is an SRB 0 (signaling radio bearer 0) message.

Specifically, the first access network protocol layer 2 message may be sent from the WE to the relay device over a BT link between the WE and the relay device.

Optionally, the first access network layer 2 message may be an RLC PDU, a MAC DPU, or a PDCP PDU.

S304. The relay device correspondingly generates a second access network protocol layer 2 message based on the first access network protocol layer 2 message, and sends the second access network protocol layer 2 message to the network-side device, where the second access network protocol layer 2 message is used to request the network-side device to establish the access network link.

In this case, the network-side device receives the second access network protocol layer 2 message sent by the relay device, and the second access network protocol layer 2 message is used to request the network-side device to establish the access network link between the network-side device and the remote device.

Optionally, before the relay device correspondingly generates the second access network layer 2 message based on the first access network protocol layer 2 message, the method further includes:
obtaining, by the relay device, the first indication information in the first access network layer 2 message or stub radio link information, where the stub radio link information includes time domain or frequency domain physical information used to identify the remote device, a radio link identifier used to identify the remote device, and radio link protocol layer entity identifier information used to identify the remote device.

Optionally, the relay device may further obtain other information that can identify the remote device.

It may be understood that, information used to identify the remote device is obtained before the relay device correspondingly generates the second access network layer 2 message based on the first access network protocol layer 2 message, so that the correspondingly generated second access protocol layer 2 message can also identify the remote device.

Optionally, the second access network layer 2 message includes second indication information, and the second indication information is used to indicate, to the network-side device, the remote device corresponding to the second access network layer 2 message or indicate that the second access network layer 2 message is used by the remote device to request the network-side device to establish the access network link.

Optionally, the second indication information includes a data type of the second access network layer 2 message and at least one of the following messages:
the identifier of the remote device, an identifier of the stub link between the relay device and the remote device, and a relay protocol processing entity identifier corresponding to the remote device.

The identifier of the stub link is an identifier of a point-to-point communication link established between the remote device and the relay device, to indicate, by using the identifier of the stub link, the remote device that communicates with the relay device.

Optionally, the second indication information may alternatively include other information that can identify the remote device or identify a link between the remote device and the relay device.

It should be noted that the data type of the second access network protocol layer 2 message is used to indicate a parsing manner used by the network-side device to parse the second access network protocol layer 2 message.

Specifically, after correctly receiving the first access network protocol layer 2 message, namely, the RRC connection request message, the BT bottom layer of the relay UE transfers the RRC connection request message to the adapter layer according to a PSM instruction of the bottom layer. The adapter layer records the TMSI and learns, by reading an RBID field, that content of the data packet is content of the SRB 0.

Specifically, when receiving the first access network layer 2 message of the remote device, and determining that the first access network layer 2 message is the SRB 0 message, the relay UE can learn that the remote device wants to establish an access network link to an eNB or restore an access network link that has failed to be established. Therefore, the relay UE generates the second access network layer 2 message. A container container is set in the second access network layer 2 message, and the container includes content of the second access network layer 2 message sent by the remote UE. Then, the relay UE sends the second access network layer 2 message to the network-side device eNB, to notify the network-side device that the access network link from the remote UE to the network-side device needs to be established.

Specifically, the second access network layer 2 message is sent by using a signaling radio bearer or a data radio bearer between the relay device and the network-side device, and a function that is of the signaling radio bearer or the data bearer and that is used to relay the remote device is configured by the network-side device.

Optionally, in an example of the present invention, before the sending the second access network layer 2 message to the network-side device, the method further includes:
sending, by the relay device, a fourth signaling radio bearer setup request to the network-side device; and
receiving the fourth signaling radio bearer configuration information returned by the network-side device, so that the relay device sends the second access network layer 2 message to the network-side device by using a fourth signaling radio bearer generated based on the fourth signaling radio bearer configuration information.

Specifically, the relay UE first sends the fourth signaling radio bearer SRB 4 setup request or an initial WE request to the eNB, so that the network-side device sends SRB 4 configuration information based on the SRB 4 setup request or the initial WE request, and the relay UE sets up an SRB 4 based on the SRB 4 configuration information, to transmit a specific access network layer 2 message between the remote device and the network-side device. The specific access network layer 2 message indicates that content inside a message that is in the access network layer 2 message and that can be identified by the relay UE and/or the network-side device is an RRC signaling message, and the RRC signaling message is used to establish and maintain the link between the remote device and the network-side device.

Optionally, the network-side device adds a cell radio network temporary identifier list (Cell Radio Network Temporary Identifier list, CRNTI list for short) to the fourth signaling radio bearer configuration information, and the CRNTI list is used by the relay UE to subsequently allocate an access network side identifier to the remote device.

Specifically, the fourth signaling radio bearer configuration information may be implemented by using the following code:

```
          SRB-ToAddMod ::= SEQUENCE {
            srb-Identity INTEGER (1..2),
                UEID to relay CRNTI list//indicating that this SRB is used to relay signaling
 data that is of the WE and that is specified in the CRNTI list.//
            rlc-Config CHOICE {
                explicitValue RLC-Config,
                defaultValue NULL
            } OPTIONAL,
        -- Cond Setup
```

Optionally, in another example of the present invention, before the relay device generates the second access network layer 2 message, the method further includes:
allocating, by the relay UE, a cell radio network temporary identifier CRNTI to the remote device based on a CRNTI list configured by the network-side device.

Further optionally, the relay UE notifies the remote device of the allocated CRNTI by using the stub link.

Optionally, in another example of the present invention, after the relay device sends the second access network layer 2 message to the network-side device, the method further includes:
receiving fourth signaling radio bearer configuration information that is returned by the network-side device in response to the second access network layer 2 message.

Specifically, the relay UE may directly forward the first access network layer 2 message that includes the identifier of the remote device, and then, after receiving the forwarded message, the eNB finds that the message includes the identifier of the remote device. Therefore, the eNB sends the fourth signaling radio bearer configuration information to the relay UE, to set up the SRB 4 between the relay UE and the eNB.

It may be understood that after the SRB 4 between the relay UE and the eNB is set up, the SRB 0 message between the remote UE and the eNB may be transmitted on the SRB 4.

Optionally, the second access network layer 2 message may be an RLC PDU, a MAC DPU, or a PDCP PDU.

S305. The network-side device generates a third access network protocol layer 2 message, and sends the third access network protocol layer 2 message to the relay device in response to the second access network protocol layer 2 message, where the third access network protocol layer 2 message includes configuration information of a radio bearer between the remote device and the network-side device.

In this case, the relay device receives the third access network protocol layer 2 message that is returned by the network-side device in response to the second access network protocol layer 2 message, and the third access network protocol layer 2 message includes the configuration information of the radio bearer between the remote device and the network-side device.

Optionally, the third access network layer 2 message includes third indication information, and the third indication information is used by the relay device to determine the remote device corresponding to the configuration information of the radio bearer, so that the remote device configures the radio bearer based on the configuration information of the radio bearer and sends, to the network-side device, a message indicating that the access network link between the remote device and the network-side device is completed.

Optionally, the third indication information includes a data type of the second access network layer 2 message and at least one of the following messages:
the identifier of the remote device, the identifier of the stub link between the relay device and the remote device, and the relay protocol processing entity identifier corresponding to the remote device.

Optionally, the third indication information may alternatively be other information that can be used by the relay device to determine the remote device corresponding to the configuration information of the radio bearer.

Specifically, the third access network layer 2 message is sent by using a signaling radio bearer or a data radio bearer between the relay device and the network-side device.

Specifically, the eNB receives the second access network layer 2 message, and determines, according to the third indication information in the second access network layer 2 message, whether the second access network layer 2 message is an SRB 0 message sent by the remote UE, to establish or restore an RRC link when the second access network layer 2 message is an SRB 0 message sent by the remote UE.

Specifically, the eNB first creates an SRB 0 processing entity, and then generates an RRC connection setup message after processing the RRC connection request message (that is, the second access network layer 2 message) sent by the remote UE. The RRC connection setup message includes configuration information of a signaling bearer between the remote UE and the eNB.

Optionally, if the relay UE is not authorized to allocate an identifier to the remote UE, the RRC connection setup message includes the CRNTI of the remote WE.

Further, after generating the RRC connection setup message, the eNB further sends the RRC connection setup message to an access network layer 2 entity that belongs to the relay UE, to generate the third access network layer 2 message.

Optionally, the third access network layer 2 message may be an RLC PDU, a MAC DPU, or a PDCP PDU.

Specifically, when a MAC PDU manner is used, a remote UE ID field may be added to a MAC PDU sent to the relay UE, to send the CRNTI.

Optionally, the third access network layer 2 message may be transmitted from the network-side device to the relay UE by using the radio bearer that may be used as relay between the relay UE and the network-side device in step S305.

S306. The relay UE correspondingly generates a fourth access network protocol layer 2 message based on the third access network protocol layer 2 message, and sends the fourth access network protocol layer 2 message to the remote device.

Optionally, the fourth access network protocol layer 2 message includes the cell temporary radio identifier CRNTI of the remote device.

Optionally, the relay device obtains one or more cell temporary radio identifiers from the network-side device, so that the relay device allocates one of the one or more cell temporary radio identifiers to the remote device.

It may be understood that when a plurality of remote UEs need to establish an access network link to the network-side device, the relay device may first obtain a plurality of CRNTIs from the network-side device (for example, the eNB) (for a specific implementation method, refer to the description in step S305 in this embodiment), so that the remote device may perform selection from the allocated CRNTIs.

Specifically, in a possible implementation of the present invention, the relay UE establishes a mapping relationship between a CRNTI and a BT link, so that the fourth access network protocol layer 2 message corresponding to the CRINT may be sent to the corresponding remote WE over a BT link corresponding to the CRINT.

Optionally, in an embodiment of the present invention, the relay UE sets up an RB to transmit SRB 1&2 messages of the WE.

Specifically, the following code may be used to transmit the SRB 1&2 messages of the remote WE by using one DRB.

```
          DRB-ToAddMod ::= SEQUENCE {
            eps-BearerIdentity INTEGER (0..15)
    OPTIONAL, -- Cond DRB -Setup//This item does not appear when UE ID to relay
 appears.//
                 UEID to relay CRNTI list//indicating that this SRB is used to relay
 signaling data that is of the WE and that is specified in the CRNTI list.//
            drb-Identity DRB-Identity,
            pdcp-Config PDCP-Config OPTIONAL, -- Cond PDCP
            rlc-Config RLC-Config OPTIONAL, -- Cond SetupM
            logicalChannelIdentity INTEGER (3..10) OPTIONAL, -- Cond
 DRB-SetupM
            logicalChannelConfig LogicalChannelConfig OPTIONAL, --
 Cond SetupM
            ...,
            [[drb-TypeChange-r12 ENUMERATED {toMCG} OPTIONAL, --
            Need OP
            rlc-Config-v1250RLC-Config-v1250 OPTIONAL -- Need ON
            ]]
          }
```

Optionally, in another embodiment of the present invention, two SRBs such as an SRB 5 and an SRB 6 are separately set up on the relay UE, and are correspondingly used to transmit the SRB 1 and the SRB 2 of the remote WE.

S307. The remote device receives the fourth access network protocol layer 2 message returned by the network-side device, and establishes the access network link between the remote device and the network-side device based on the fourth access network protocol layer 2 message.

In this embodiment of the present invention, the fourth access network protocol layer 2 message is correspondingly generated based on the third access network protocol layer 2 message, and the third access network protocol layer 2 message includes the configuration information of the radio bearer between the remote device and the network-side device. The access network link between the remote device and the network-side device is established, so that the remote device and the network-side device can subsequently communicate with each other based on the link. However, in an actual communication process, all messages are transmitted between the remote device and the network-side device by using the relay device.

Optionally, the fourth access network protocol layer 2 message includes the cell temporary radio identifier of the remote device.

Specifically, the remote device obtains the identifier, namely, the CRNTI, of the remote device on the network-side device from fourth access network information.

Specifically, after receiving the "RRC connection setup" message, the remote WE obtains the CRNTI, sets up the signaling radio bearer SRB between the remote UE and the eNB based on SRB configuration information carried in the message, and generates an "RRC connection setup complete" message and sends the message to the eNB. This data packet is transmitted by using a relay SRB that is newly set up between the relay UE and the eNB. The "RRC connection setup complete" message carries an "attach request" message submitted by a NAS stratum.

Further, before the remote device establishes the access network link to the network-side device by using the relay device, the remote device first needs to select an access bearer link type.

Optionally, before step 301, the method further includes the following step:

S308. A non-access stratum NAS stratum of the remote device obtains link selection result information according to indication information, or an AS stratum of the remote device determines a link selection result according to indication information.

In this embodiment of the present invention, the non-access stratum NAS stratum of the remote device obtains the link selection result information according to the indication information, and sends the link selection result information to the access stratum AS stratum, so that the AS stratum determines, based on the link selection result information, whether to establish the access network link to the network-side device by using the relay device; or
the AS stratum determines, according to the indication information, whether to establish the access network link to the network-side device by using the relay device.

In this embodiment of the present invention, because the indication information may reflect a data link requirement of the remote device, a manner of establishing a link by the remote device is determined by using the indication information. The link selection result obtained in this determining manner accurately reflects an access requirement of the remote device. Further, the AS stratum determines the link selection result according to the indication information, or the NAS stratum obtains the link selection result according to the indication information and then sends the link selection result to the AS stratum, so that a link selection manner is more flexible, and therefore service experience of a user can be further improved.

Optionally, the indication information includes at least one of the following: EMM registration information, internal setting information, communications entity status information, and data sending requirement information.

Specifically, the EMM registration information includes an EMM registered state or an EMM unregistered state; the internal setting information includes a power saving mode and a non-power saving mode; the communications entity layer status information includes out-of-service, an ECM registered state, an ECM unregistered state, an MM idle state, or an MM connected state; and the data sending requirement information includes quality of service QoS information and data type information, and the data type information includes an incoming call, an outgoing call, and an emergency call.

Optionally, when at least one of the following indication information is met, it is determined that the remote device establishes an initial link to the network-side device by using the relay device:
the EMM registration information is the EMM unregistered state, the internal setting information is the power saving mode, the communications entity status information is out-of-service, the data type information is an incoming call, the data type information is an outgoing call, and the data type information is an emergency call; or
if the data type information is an outgoing call, an outgoing call, or an emergency call, and the communications entity layer status information is the ECM registered state, it is determined that the remote device establishes an initial link to the network-side device by using the relay device.

For example, in an example of the present invention, when the indication information includes an emergency call, an incoming call, or an outgoing call, the AS initiates establishment of two links at the same time. One is that an RRC link to the eNB in the cellular system is directly established by using a cellular radio module, and the other is that the relay UE is searched for by using a D2D module (including LTE-D2D, BT, Wi-Fi), and a relay link that has been relayed is established simultaneously when the relay UE is found.

Specifically, when it is determined that the access network link between the remote device and the network-side device is established by using the relay device, and a relay mode is available, a bearer link selected by the NAS stratum of the remote WE to send a NAS signaling attach request is a bearer link of the relay device. The NAS stratum of the remote WE sends indication information to the AS stratum, to indicate that a bearer link type is a relay bearer. The remote WE then sends an attach request message generated by the NAS stratum to an AS stratum entity, for example, an RRC layer. In this way, the AS stratum entity chooses to establish the access network link to the network-side device by using the relay device.

Further, when it is determined that the access network link between the remote device and the network-side device is established by using the relay device, but suitable relay UE cannot be found, or time of establishing the link by using the relay UE exceeds a specified threshold, the AS stratum selects a cellular radio module to directly establish an RRC link to the eNB. The threshold may be internally set by the UE, or may be obtained from a network on which the UE currently camps.

In the technical solution provided in this embodiment of the present invention, the relay device forwards the first access network protocol layer 2 message requested by the remote device from the network-side device, and correspondingly generates the second access network protocol layer 2 message based on the first access network protocol layer 2 message and sends the second access network protocol layer 2 message to the network-side device, so that the network-side device generates the third access network protocol layer 2 message based on the second access network protocol layer 2 message and sends the third access network protocol layer 2 message to the relay device, where third access network protocol layer 2 message carries the configuration information of the radio bearer between the remote device and the network-side device. Then the relay device correspondingly generates the fourth access network protocol layer 2 message based on the third access network protocol layer 2 message and sends the fourth access network protocol layer 2 message to the remote device. Finally, the remote device establishes the access network link between the remote device and the network-side device based on the configuration information of the radio bearer. The access network link between the remote device and the network-side device is established by using the relay device, so that when it is inconvenient for the remote device to directly communicate with the network-side device, the remote device can still successfully access the network-side device, thereby improving network access flexibility. For example, when the remote device is located outside coverage of the network-side device, the remote device can establish the access network link to the network-side device by using the relay device.

Further, because the access network link between the remote device and the network-side device is established by using the relay device, the remote device only needs to perform physical communication with the relay device, thereby reducing transmit power of the remote device, and saving power of the remote device.

Further, because the network-side device establishes the access network link to the remote device by using the relay device, the remote device quickly establishes the link to the network device, so that a link establishment delay of the remote device is reduced, and signaling sent by the remote device is reduced, thereby actually reducing power consumption of the remote device.

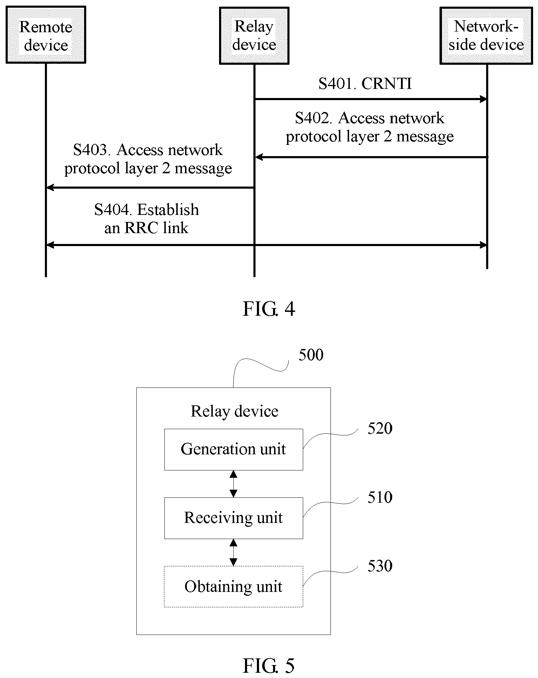

FIG. 4 is a schematic flowchart of another link establishment method according to an embodiment of the present invention. The method is based on the following scenario: A network-side device pre-stores a stub link mapping relationship between a remote device and a relay device. For example, after the remote device fails to establish an access network link to the network-side device by using the relay device, or the remote device passively disconnects an access network link (for example, the relay device hands over cells) to the network-side device after successfully establishing the link by using the relay device at a previous moment, to restore the access network link between the remote device and the network-side device, the network-side device may actively request the relay device to establish the access network link between the network-side device and the remote device. Alternatively, due to a common attribute, the network side records a pairing relationship between the relay device and the remote device. For example, the remote device and the relay device belong to a same user, belong to a same circle of friends, have a common service type, have a common ISDN number, or the like. When the network side needs to send data to the remote device, the network side actively initiates establishment of a link to the remote device by using the relay device. A specific link establishment method procedure is as follows. In the method shown in FIG. 4, for content that is the same as or similar to that in the method shown in FIG. 3, refer to detailed descriptions in FIG. 3. Details are not described herein again. As shown in FIG. 4, the method may include the following steps.

S401. A network-side device sends a CRNTI to a relay device, so that the relay device allocates the CRNTI to a remote device.

In this embodiment of the present invention, before actively requesting the relay device to establish an access network link to the remote device, the network-side device first allocates the CRNTI to the remote device.

Optionally, in this embodiment of the present invention, the network-side device allocates one or more cell temporary radio identifiers to the relay device, so that the relay device allocates one of the one or more cell temporary radio identifiers to the remote device.

S402. The network-side device sends an access network protocol layer 2 message to the relay device.

The access network protocol layer 2 message is used to establish an access network link between the network-side device and the remote device, and the access network protocol layer 2 message includes configuration information of a radio bearer between the remote device and the network-side device.

In this embodiment of the present invention, when the network-side device sends the access network protocol layer 2 message to the relay device, the relay device receives the access network protocol layer 2 message sent by the network-side device.

Optionally, the access network protocol layer 2 message includes fifth indication information, and the fifth indication information is used by the relay device to determine the remote device corresponding to the configuration information of the radio bearer, so that the remote device configures the radio bearer based on the configuration information of the radio bearer and sends, to the network-side device, a message indicating that the access network link between the remote device and the network-side device is completed.

Optionally, the fifth indication information includes at least one of the following messages:
an identifier of the remote device, an identifier of a stub link between the relay device and the remote device, and a relay protocol processing entity identifier corresponding to the remote device.

Specifically, the access network protocol layer 2 message is sent by using a signaling radio bearer or a data radio bearer between the relay device and the network-side device.

Optionally, the access network protocol layer 2 message is an RLC PDU, a MAC DPU, or a PDCP PDU.

Specifically, the access network protocol layer 2 message is sent by using a signaling radio bearer or a data radio bearer between the relay device and the network-side device.

Further, before the network-side device sends the access network protocol layer 2 message to the relay device, the method further includes:
obtaining, by the network-side device, a correspondence between the relay device and the remote device, where the correspondence is used to instruct the relay device to perform wireless communication with the remote device.

S403. The relay device sends the radio bearer configuration to the remote device based on the access network protocol layer 2 message over a radio link between the relay device and the remote device.

S404. The remote device receives the access network protocol layer 2 message, and establishes an access network link between the remote device and the network-side device based on the access network protocol layer 2 message.

In the technical solution provided in this embodiment of the present invention, the network-side device actively sends the access network protocol layer 2 message to the relay device, and the access network protocol layer 2 message includes the configuration information of the radio bearer between the remote device and the network-side device, so that the relay device forwards the access network protocol layer 2 message to the remote device, and the remote device establishes the access network link to the network-side device based on the configuration information of the radio bearer. The network-side device actively requests, by using the relay device, to establish the access network link to the remote device. Finally, the remote device may establish the access network link to the network-side device by using the relay device, so that when it is inconvenient for the remote device to directly communicate with the network-side device, the remote device can still successfully access the network-side device, thereby improving network access flexibility. For example, when the remote device is located outside coverage of the network-side device, the remote device can establish the access network link to the network-side device by using the relay device.

Further, because the access network link between the remote device and the network-side device is established by using the relay device, the remote device only needs to perform physical communication with the relay device, thereby reducing transmit power of the remote device, and saving power of the remote device.

Further, because the network-side device establishes the access network link to the remote device by using the relay device, the remote device quickly establishes the link to the network device, so that a link establishment delay of the remote device is reduced, and signaling sent by the remote device is reduced, thereby actually reducing power consumption of the remote device.

FIG. 5 is a schematic structural diagram of a relay device according to an embodiment of the present invention. As shown in FIG. 5, the relay device 500 includes:
a receiving unit 510, configured to receive, over a stub link between the relay device and a remote device, a first access network protocol layer 2 message sent by the remote device, where the first access network protocol layer 2 message is used to indicate that the remote device requests to establish an access network link between a network-side device and the remote device; and
a generation unit 520, configured to: correspondingly generate a second access network protocol layer 2 message based on the first access network protocol layer 2 message, and send the second access network protocol layer 2 message to the network-side device, where the second access network protocol layer 2 message is used to request the network-side device to establish the access network link.

The receiving unit 510 is further configured to receive a third access network protocol layer 2 message that is returned by the network-side device in response to the second access network protocol layer 2 message, and the third access network protocol layer 2 message includes configuration information of a radio bearer between the remote device and the network-side device.

The generation unit 510 is further configured to: correspondingly generate a fourth access network protocol layer 2 message based on the third access network protocol layer 2 message, and send the fourth access network protocol layer 2 message to the remote device.

Optionally, the first access network protocol layer 2 message includes first indication information, the first indication information is used to identify the remote device, and the first indication information includes at least one of the following information:
an identifier of the remote device, a service type of the remote device, a group attribute of the remote device, and a device type or a device level of the remote device.

Optionally, the relay device 500 further includes:
an obtaining unit 530, configured to obtain the first indication information in the first access network protocol layer 2 message or stub radio link information, where the stub radio link information includes time domain or frequency domain physical information used to identify the remote device, a radio link identifier used to identify the remote device, and radio link protocol layer entity identifier information used to identify the remote device.

Optionally, the second access network protocol layer 2 message includes second indication information, and the second indication information is used to indicate, to the network-side device, the remote device corresponding to the second access network protocol layer 2 message or indicate that the second access network protocol layer 2 message is used by the remote device to request the network-side device to establish the access network link.

Optionally, the second indication information includes a data type of the second access network protocol layer 2 message and at least one of the following messages:
an identifier of the remote device, an identifier of the stub link between the relay device and the remote device, and a relay protocol processing entity identifier corresponding to the remote device.

Optionally, the third access network protocol layer 2 message includes third indication information, and the third indication information is used to enable the relay device to determine the remote device corresponding to the configuration information of the radio bearer.

Optionally, the third indication information includes a data type of the second access network protocol layer 2 message and at least one of the following messages:
an identifier of the remote device, an identifier of the stub link between the relay device and the remote device, and a relay protocol processing entity identifier corresponding to the remote device.

Optionally, the second access network protocol layer 2 message and/or the third access network protocol layer 2 message are/is sent by using a signaling radio bearer or a data radio bearer between the relay device and the network-side device.

Optionally, the fourth access network protocol layer 2 message includes a cell temporary radio identifier of the remote device.

Optionally, the obtaining unit is further configured to obtain one or more cell temporary radio identifiers from the network-side device, so that the relay device allocates one of the one or more cell temporary radio identifiers to the remote device.

Optionally, the first access network protocol layer 2 message is an RLC PDU, a MAC DPU, or a PDCP PDU;
the second access network protocol layer 2 message is an RLC PDU, a MAC DPU, or a PDCP PDU;
the third access network protocol layer 2 message is an RLC PDU, a MAC DPU, or a PDCP PDU; and
the fourth access network protocol layer 2 message is an RLC PDU, a MAC DPU, or a PDCP PDU.

Optionally, the relay device further includes:
a sending unit 540, configured to send a fourth signaling radio bearer setup request to the network-side device.

The receiving unit 510 is further configured to receive the fourth signaling radio bearer configuration information returned by the network-side device, so that the relay device sends the second access network protocol layer 2 message to the network-side device by using a fourth signaling radio bearer generated based on the fourth signaling radio bearer configuration information.

Optionally, the receiving unit 510 is further configured to:
receiving fourth signaling radio bearer configuration information that is returned by the network-side device in response to the second access network protocol layer 2 message.

In this embodiment of the present invention, the access network link between the remote device and the network-side device is established by using the relay device, so that when it is inconvenient for the remote device to directly communicate with the network-side device, the remote device can still successfully access the network-side device, thereby improving network access flexibility.

Further, because the access network link between the remote device and the network-side device is established by using the relay device, the remote device only needs to perform physical communication with the relay device, thereby reducing transmit power of the remote device, and saving power of the remote device.

Further, because the network-side device establishes the access network link to the remote device by using the relay device, the remote device quickly establishes the link to the network device, so that a link establishment delay of the remote device is reduced, and signaling sent by the remote device is reduced, thereby actually reducing power consumption of the remote device.

In this embodiment, the relay device 500 is presented in a form of a unit. The "unit" herein may be an application-specific integrated circuit (application-specific integrated circuit, ASIC), a processor and a memory that execute one or more software or firmware programs, an integrated logic circuit, and/or another component that can provide the foregoing functions.

It may be understood that, functions of the functional units of the relay device 500 in this embodiment may be specifically implemented based on the method in the foregoing method embodiment. For a specific implementation process, refer to related descriptions in the foregoing method embodiment. Details are not described herein again.

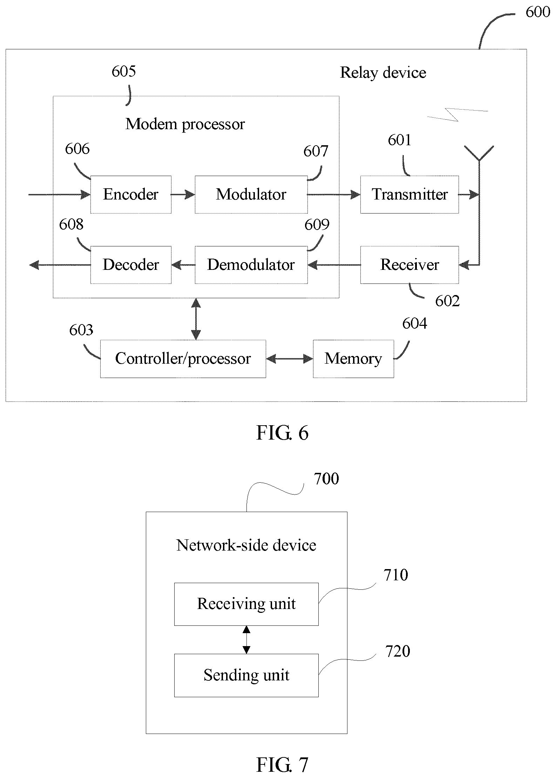

FIG. 6 is a schematic structural diagram of another relay device according to an embodiment of the present invention. As shown in FIG. 6, the relay device 600 includes:
a transmitter 601, a receiver 602, and a processor 603. The processor 603 may also be a controller, and is indicated as a "controller/processor 603" in FIG. 6. Optionally, the relay device 600 may further include a modem processor 605, and the modem processor 605 may include an encoder 606, a modulator 607, a decoder 608, and a demodulator 605.

In an example, the transmitter 601 adjusts (such as, through analog conversion, filtering, amplification, and up-conversion) the output sampling and generates an uplink signal. The uplink signal is transmitted to the base station in the foregoing embodiments by an antenna. On a downlink, the antenna receives a downlink signal transmitted by the base station in the foregoing embodiments. The receiver 602 adjusts (such as, through filtering, amplification, down-conversion, and digitization) a signal received from the antenna and provides input sampling. In the modem processor 605, the encoder 606 receives service data and a signaling message that are to be sent on an uplink, and processes (such as, through formatting, encoding, and interleaving) the service data and the signaling message. The modulator 607 further processes (such as, through symbol mapping and modulation) the encoded service data and the encoded signaling message, and provides output sampling. The demodulator 609 processes (such as, through demodulation) the input sampling and provides symbol estimation. The decoder 608 processes (such as, through de-interleaving and decoding) the symbol estimation and provides the decoded data and the decoded signaling message that are sent to the relay device 600. The encoder 606, the modulator 607, the demodulator 609, and the decoder 608 may be implemented by the composite modem processor 605. These units perform processing based on a radio access technology (such as an access technology in LTE and another evolved system) used by a radio access network. It should be noted that when the relay device 600 does not include the modem processor 605, the foregoing functions of the modem processor 605 may also be completed by the processor 603.

The processor 603 controls and manages an action of the relay device 600, and is configured to perform a processing process performed by the relay device 600 in the foregoing embodiment of the present invention. For example, the processor 603 is further configured to perform corresponding steps in the foregoing method embodiment, and/or another process in the technical solution described in this application.

Further, the relay device 600 may further include a memory 604. The memory 604 is configured to store program code and data that are used by the relay device 600.

FIG. 7 is a schematic structural diagram of a network-side device according to an embodiment of the present invention. As shown in FIG. 7, the network-side device 700 includes:
a receiving unit 710, configured to receive a second access network protocol layer 2 message sent by a relay device, where the second access network protocol layer 2 message is used to request the network-side device to establish an access network link between the network-side device and a remote device; and
a sending unit 720, configured to send a third access network protocol layer 2 message to the relay device in response to the second access network protocol layer 2 message, where the third access network protocol layer 2 message includes configuration information of a radio bearer between the remote device and the network-side device.

Optionally, the third access network protocol layer 2 message includes third indication information, and the third indication information is used to enable the relay device to determine the remote device corresponding to the configuration information of the radio bearer.

Optionally, the third indication information includes a data type of the second access network protocol layer 2 message and at least one of the following messages:
an identifier of the remote device, an identifier of a stub link between the relay device and the remote device, and a relay protocol processing entity identifier corresponding to the remote device.

Optionally, the second access network protocol layer 2 message and/or the third access network protocol layer 2 message are/is sent by using a signaling radio bearer or a data radio bearer between the relay device and the network-side device.

Optionally, the sending unit 720 is further configured to:
send one or more cell temporary radio identifiers to the relay device, so that the relay device allocates one of the one or more cell temporary radio identifiers to the remote device.

Optionally, the second access network protocol layer 2 message is an RLC PDU, a MAC DPU, or a PDCP PDU; and
the third access network protocol layer 2 message is an RLC PDU, a MAC DPU, or a PDCP PDU.

In this embodiment of the present invention, the access network link between the remote device and the network-side device is established by using the relay device, so that when it is inconvenient for the remote device to directly communicate with the network-side device, the remote device can still successfully access the network-side device, thereby improving network access flexibility.

Further, because the access network link between the remote device and the network-side device is established by using the relay device, the remote device only needs to perform physical communication with the relay device, thereby reducing transmit power of the remote device, and saving power of the remote device.

Further, because the network-side device establishes the access network link to the remote device by using the relay device, the remote device quickly establishes the link to the network device, so that a link establishment delay of the remote device is reduced, and signaling sent by the remote device is reduced, thereby actually reducing power consumption of the remote device.

In this embodiment, the network-side device 700 is presented in a form of a unit. The "unit" herein may be an application-specific integrated circuit (application-specific integrated circuit, ASIC), a processor and a memory that execute one or more software or firmware programs, an integrated logic circuit, and/or another component that can provide the foregoing functions.

It may be understood that, functions of the functional units of the network-side device 700 in this embodiment may be specifically implemented based on the method in the foregoing method embodiment. For a specific implementation process, refer to related descriptions in the foregoing method embodiment. Details are not described herein again.

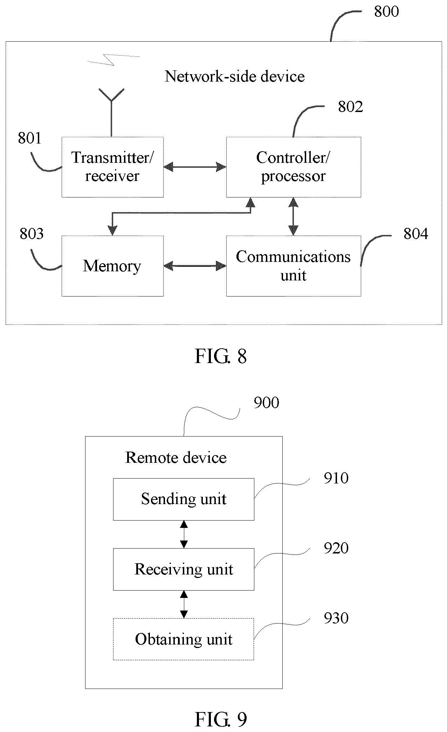

FIG. 8 is a schematic structural diagram of another network-side device according to an embodiment of the present invention. As shown in FIG. 8, the network-side device 800 includes:
a transmitter/receiver 801 and a processor 802. The processor 802 may also be a controller, and is indicated as a "controller/processor 802" in FIG. 8. The transmitter/receiver 801 is configured to support the network-side device in information receiving and transmission with the terminal in the foregoing embodiments, and support the terminal in performing radio communication with another terminal. The processor 802 performs various functions used to communicate with the terminal. On an uplink, an uplink signal from the terminal is received by using an antenna, is demodulated (for example, a high frequency signal is demodulated into a baseband signal) by the receiver 801, and is further processed by the processor 802 to restore service data and signaling information that are sent by the terminal. On a downlink, the service data and the signaling message are processed by the processor 802, and are modulated (for example, a baseband signal is modulated into a high frequency signal) by the transmitter 801, to generate a downlink signal, and the downlink signal is transmitted to the terminal by using the antenna. It should be noted that the foregoing demodulation or modulation function may also be implemented by the processor 802. For example, the processor 802 is further configured to perform corresponding steps in the foregoing method embodiment, and/or another process in the technical solution described in this embodiment of the present invention.

Further, the network-side device 800 may further include a memory 803. The memory 803 is configured to store program code and data that are used by the network-side device 500. In addition, the network-side device may further include a communications unit 804. The communications unit 804 is configured to support the network-side device in communicating with another network entity (for example, a network device in a core network). For example, in an LTE system, the communications unit 804 may be an S1-U interface, and is configured to support the network-side device in communicating with a serving gateway (Serving Gateway, SGW). Alternatively, the communications unit 804 may be an S1-MME interface, and is configured to support the network-side device in communicating with a mobility management entity (Mobility Management Entity, MME).

It may be understood that FIG. 8 shows only a simplified design of the network-side device 800. In actual application, the network-side device 800 may include any quantities of transmitters, receivers, processors, controllers, memories, and communications units. All network-side devices that can implement the embodiments of the present invention fall within the protection scope of the embodiments of the present invention.

FIG. 9 is a schematic structural diagram of a remote device according to an embodiment of the present invention. As shown in FIG. 9, the remote device 900 includes:
a sending unit 910, configured to send a first access network protocol layer 2 message to a relay device over a stub link between the remote device and the relay device, where the first access network protocol layer 2 message is used to indicate that the remote device requests to establish an access network link between a network-side device and the remote device; and
a receiving unit 920, configured to receive a fourth access network protocol layer 2 message returned by the network-side device, where the fourth access network protocol layer 2 message is correspondingly generated based on a third access network protocol layer 2 message, and the third access network protocol layer 2 message includes configuration information of a radio bearer between the remote device and the network-side device.

Optionally, the first access network protocol layer 2 message includes first indication information, the first indication information is used to identify the remote device, and the first indication information includes at least one of the following information:
an identifier of the remote device, a service type of the remote device, a group attribute of the remote device, and a device type or a device level of the remote device.

Optionally, the remote device 900 further includes:
an obtaining unit 930, configured to obtain a cell temporary radio identifier of the remote device by using the fourth access network protocol layer 2 message, where the fourth access network protocol layer 2 message includes the cell temporary radio identifier.

Optionally, the first access network protocol layer 2 message is an RLC PDU, a MAC DPU, or a PDCP PDU;
the third access network protocol layer 2 message is an RLC PDU, a MAC DPU, or a PDCP PDU; and
the fourth access network protocol layer 2 message is an RLC PDU, a MAC DPU, or a PDCP PDU.

In this embodiment of the present invention, the access network link between the remote device and the network-side device is established by using the relay device, so that when it is inconvenient for the remote device to directly communicate with the network-side device, the remote device can still successfully access the network-side device, thereby improving network access flexibility.

Further, because the access network link between the remote device and the network-side device is established by using the relay device, the remote device only needs to perform physical communication with the relay device, thereby reducing transmit power of the remote device, and saving power of the remote device.

Further, because the network-side device establishes the access network link to the remote device by using the relay device, the remote device quickly establishes the link to the network device, so that a link establishment delay of the remote device is reduced, and signaling sent by the remote device is reduced, thereby actually reducing power consumption of the remote device.

In this embodiment, the remote device 900 is presented in a form of a unit. The "unit" herein may be an application-specific integrated circuit (application-specific integrated circuit, ASIC), a processor and a memory that execute one or more software or firmware programs, an integrated logic circuit, and/or another component that can provide the foregoing functions.

It may be understood that, functions of the functional units of the remote device 900 in this embodiment may be specifically implemented based on the method in the foregoing method embodiment. For a specific implementation process, refer to related descriptions in the foregoing method embodiment. Details are not described herein again.

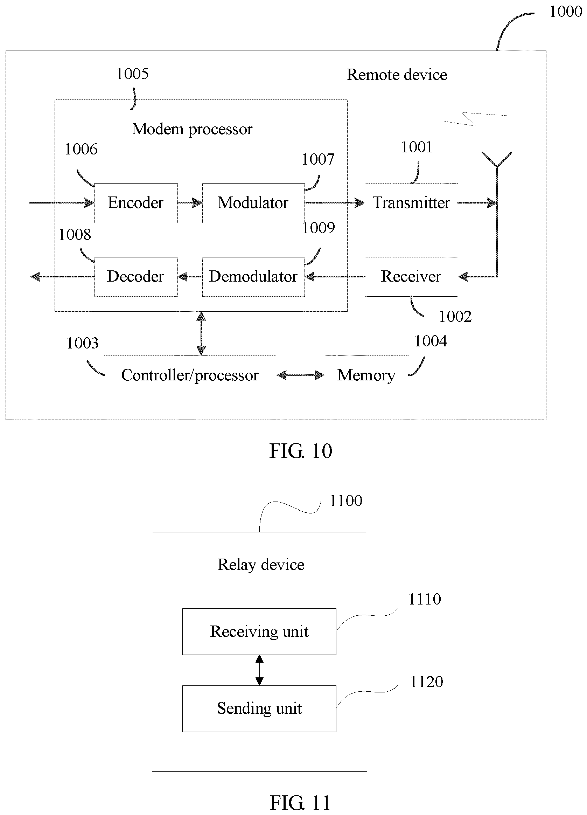

FIG. 10 is a schematic structural diagram of another remote device according to an embodiment of the present invention. As shown in FIG. 10, the remote device 1000 includes:
a transmitter 1001, a receiver 1002, and a processor 1003. The processor 1003 may also be a controller, and is indicated as a "controller/processor 1003" in FIG. 10. Optionally, the relay device 1000 may further include a modem processor 1005, and the modem processor 1005 may include an encoder 1006, a modulator 1007, a decoder 1008, and a demodulator 1005.

In an example, the transmitter 1001 adjusts (such as, through analog conversion, filtering, amplification, and up-conversion) the output sampling and generates an uplink signal. The uplink signal is transmitted to the base station in the foregoing embodiments by an antenna. On a downlink, the antenna receives a downlink signal transmitted by the base station in the foregoing embodiments. The receiver 1002 adjusts (such as, through filtering, amplification, down-conversion, and digitization) a signal received from the antenna and provides input sampling. In the modem processor 1005, the encoder 1006 receives service data and a signaling message that are to be sent on an uplink, and processes (such as, through formatting, coding, and interleaving) the service data and the signaling message. The modulator 1007 further processes (such as, through symbol mapping and modulation) the encoded service data and the encoded signaling message, and provides output sampling. The demodulator 1009 processes (such as, through demodulation) the input sampling and provides symbol estimation. The decoder 1008 processes (such as, through de-interleaving and decoding) the symbol estimation and provides the decoded data and the decoded signaling message that are sent to the relay device 1000. The encoder 1006, the modulator 1007, the demodulator 1009, and the decoder 1008 may be implemented by the composite modem processor 1005. These units perform processing based on a radio access technology (such as an access technology in LTE and another evolved system) used by a radio access network. It should be noted that when the remote device 1000 does not include the modem processor 1005, the foregoing functions of the modem processor 1005 may also be completed by the processor 1003.

The processor 1003 controls and manages an action of the remote device 1000, and is configured to perform a processing process performed by the remote device 1000 in the foregoing embodiment of the present invention. For example, the processor 1003 is further configured to perform corresponding steps in the foregoing method embodiment, and/or another process in the technical solution described in this application.

Further, the remote device 1000 may further include a memory 1004. The memory 1004 is configured to store program code and data that are used by the remote device 1000.

FIG. 11 is a schematic structural diagram of a relay device according to an embodiment of the present invention. As shown in FIG. 11, the relay device 1100 includes:
a receiving unit 1110, configured to receive an access network protocol layer 2 message sent by a network-side device, where the access network protocol layer 2 message is used to establish an access network link between the network-side device and a remote device, and the access network protocol layer 2 message includes configuration information of a radio bearer between the remote device and the network-side device; and
a sending unit 1120, configured to send the radio bearer configuration to the remote device based on the access network protocol layer 2 message over a radio link between the relay device and the remote device.

Optionally, the access network protocol layer 2 message includes fifth indication information, and the fifth indication information is used to enable the relay device to determine the remote device corresponding to the configuration information of the radio bearer.

Optionally, the fifth indication information includes at least one of the following messages:
an identifier of the remote device, an identifier of a stub link between the relay device and the remote device, and a relay protocol processing entity identifier corresponding to the remote device.

Specifically, the access network protocol layer 2 message is sent by using a signaling radio bearer or a data radio bearer between the relay device and the network-side device.

Optionally, the access network protocol layer 2 message is an RLC PDU, a MAC DPU, or a PDCP PDU.

Optionally, the receiving unit 1110 is further configured to obtain one or more cell temporary radio identifiers from the network-side device, so that the relay device allocates one of the one or more cell temporary radio identifiers to the remote device.

In this embodiment of the present invention, the access network link between the remote device and the network-side device is established by using the relay device, so that when it is inconvenient for the remote device to directly communicate with the network-side device, the remote device can still successfully access the network-side device, thereby improving network access flexibility.

Further, because the access network link between the remote device and the network-side device is established by using the relay device, the remote device only needs to perform physical communication with the relay device, thereby reducing transmit power of the remote device, and saving power of the remote device.

Further, because the network-side device establishes the access network link to the remote device by using the relay device, the remote device quickly establishes the link to the network device, so that a link establishment delay of the remote device is reduced, and signaling sent by the remote device is reduced, thereby actually reducing power consumption of the remote device.

In this embodiment, the relay device 1100 is presented in a form of a unit. The "unit" herein may be an application-specific integrated circuit (application-specific integrated circuit, ASIC), a processor and a memory that execute one or more software or firmware programs, an integrated logic circuit, and/or another component that can provide the foregoing functions.

It may be understood that, functions of the functional units of the relay device 1100 in this embodiment may be specifically implemented based on the method in the foregoing method embodiment. For a specific implementation process, refer to related descriptions in the foregoing method embodiment. Details are not described herein again.

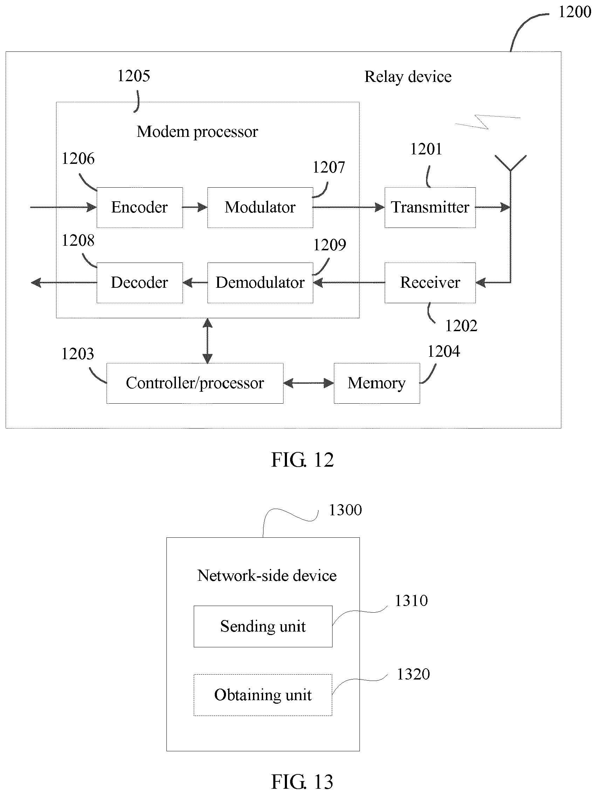

FIG. 12 is a schematic structural diagram of another relay device according to an embodiment of the present invention. As shown in FIG. 12, the relay device 1200 includes:
a transmitter 1201, a receiver 1202, and a processor 1203. The processor 1203 may also be a controller, and is indicated as a "controller/processor 1203" in FIG. 12. Optionally, the relay device 1200 may further include a modem processor 1205, and the modem processor 1205 may include an encoder 1206, a modulator 1207, a decoder 1208, and a demodulator 1205.

In an example, the transmitter 1201 adjusts (such as, through analog conversion, filtering, amplification, and up-conversion) the output sampling and generates an uplink signal. The uplink signal is transmitted to the base station in the foregoing embodiments by an antenna. On a downlink, the antenna receives a downlink signal transmitted by the base station in the foregoing embodiments. The receiver 1202 adjusts (such as, through filtering, amplification, down-conversion, and digitization) a signal received from the antenna and provides input sampling. In the modem processor 1205, the encoder 1206 receives service data and a signaling message that are to be sent on an uplink, and processes (such as, through formatting, coding, and interleaving) the service data and the signaling message. The modulator 1207 further processes (such as, through symbol mapping and modulation) the encoded service data and the encoded signaling message, and provides output sampling. The demodulator 1209 processes (such as, through demodulation) the input sampling and provides symbol estimation. The decoder 1208 processes (such as, through de-interleaving and decoding) the symbol estimation and provides the decoded data and the decoded signaling message that are sent to the relay device 1200. The encoder 1206, the modulator 1207, the demodulator 1209, and the decoder 1208 may be implemented by the composite modem processor 1205. These units perform processing based on a radio access technology (such as an access technology in LTE and another evolved system) used by a radio access network. It should be noted that when the relay device 1200 does not include the modem processor 1205, the foregoing functions of the modem processor 1205 may also be completed by the processor 1203.

The processor 1203 controls and manages an action of the relay device 1200, and is configured to perform a processing process performed by the relay device 1200 in the foregoing embodiment of the present invention. For example, the processor 1203 is further configured to perform corresponding steps in the foregoing method embodiment, and/or another process in the technical solution described in this application.

Further, the relay device 1200 may further include a memory 1204. The memory 1204 is configured to store program code and data that are used by the relay device 1200.

FIG. 13 is a schematic structural diagram of a network-side device according to an embodiment of the present invention. As shown in FIG. 13, the network-side device 1300 includes:
a sending unit 1310, configured to send an access network protocol layer 2 message to a relay device, where the access network protocol layer 2 message is used to establish an access network link between the network-side device and a remote device, and the access network protocol layer 2 message includes configuration information of a radio bearer between the remote device and the network-side device.

Optionally, the access network protocol layer 2 message includes fifth indication information, and the fifth indication information is used to enable the relay device to determine the remote device corresponding to the configuration information of the radio bearer.

Optionally, the fifth indication information includes at least one of the following messages:
an identifier of the remote device, an identifier of a stub link between the relay device and the remote device, and a relay protocol processing entity identifier corresponding to the remote device.

Specifically, the access network protocol layer 2 message is sent by using a signaling radio bearer or a data radio bearer between the relay device and the network-side device.

Optionally, the access network protocol layer 2 message is an RLC PDU, a MAC DPU, or a PDCP PDU.

Optionally, the sending unit 1310 is further configured to:
send one or more cell temporary radio identifiers to the relay device, so that the relay device allocates one of the one or more cell temporary radio identifiers to the remote device.

Optionally, the network-side device 1300 further includes:
an obtaining unit 1320, configured to obtain a correspondence between the relay device and the remote device, where the correspondence is used to instruct the relay device to perform wireless communication with the remote device.

In this embodiment of the present invention, the access network link between the remote device and the network-side device is established by using the relay device, so that when it is inconvenient for the remote device to directly communicate with the network-side device, the remote device can still successfully access the network-side device, thereby improving network access flexibility.

Further, because the access network link between the remote device and the network-side device is established by using the relay device, the remote device only needs to perform physical communication with the relay device, thereby reducing transmit power of the remote device, and saving power of the remote device.

Further, because the network-side device establishes the access network link to the remote device by using the relay device, the remote device quickly establishes the link to the network device, so that a link establishment delay of the remote device is reduced, and signaling sent by the remote device is reduced, thereby actually reducing power consumption of the remote device.

In this embodiment, the network-side device 1300 is presented in a form of a unit. The "unit" herein may be an application-specific integrated circuit (application-specific integrated circuit, ASIC), a processor and a memory that execute one or more software or firmware programs, an integrated logic circuit, and/or another component that can provide the foregoing functions.

It may be understood that, functions of the functional units of the network-side device 1300 in this embodiment may be specifically implemented based on the method in the foregoing method embodiment. For a specific implementation process, refer to related descriptions in the foregoing method embodiment. Details are not described herein again.

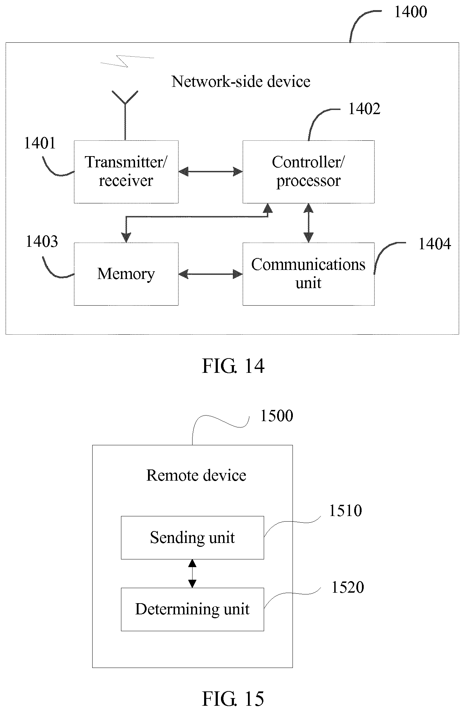

FIG. 14 is a schematic structural diagram of another network-side device according to an embodiment of the present invention. As shown in FIG. 14, the network-side device 1400 includes:
a transmitter/receiver 1401 and a processor 1402. The processor 1402 may also be a controller, and is indicated as a "controller/processor 1402" in FIG. 14. The transmitter/receiver 1401 is configured to support the network-side device in information receiving and transmission with the terminal in the foregoing embodiments, and support the terminal in performing radio communication with another terminal. The processor 1402 performs various functions used to communicate with the terminal. On an uplink, an uplink signal from the terminal is received by using an antenna, is demodulated (for example, a high frequency signal is demodulated into a baseband signal) by the receiver 1401, and is further processed by the processor 1402 to restore service data and signaling information that are sent by the terminal. On a downlink, the service data and the signaling message are processed by the processor 1402, and are modulated (for example, a baseband signal is modulated into a high frequency signal) by the transmitter 1401, to generate a downlink signal, and the downlink signal is transmitted to the terminal by using the antenna. It should be noted that the foregoing demodulation or modulation function may also be implemented by the processor 1402. For example, the processor 1402 is further configured to perform corresponding steps in the foregoing method embodiment, and/or another process in the technical solution described in this embodiment of the present invention.

Further, the network-side device 1400 may further include a memory 1403. The memory 1403 is configured to store program code and data that are used by the network-side device 500. In addition, the network-side device may further include a communications unit 1404. The communications unit 1404 is configured to support the network-side device in communicating with another network entity (for example, a network device in a core network). For example, in an LTE system, the communications unit 1404 may be an S1-U interface, and is configured to support the network-side device in communicating with a serving gateway (Serving Gateway, SGW). Alternatively, the communications unit 1404 may be an S1-MME interface, and is configured to support the network-side device in communicating with a mobility management entity (Mobility Management Entity, MME).

It may be understood that FIG. 14 shows only a simplified design of the network-side device 1400. In actual application, the network-side device 1400 may include any quantities of transmitters, receivers, processors, controllers, memories, and communications units. All network-side devices that can implement the embodiments of the present invention fall within the protection scope of the embodiments of the present invention.

FIG. 15 is a schematic structural diagram of a remote device according to an embodiment of the present invention. As shown in FIG. 15, the remote device 1500 includes:
a sending unit 1510, used by a non-access stratum NAS stratum of the remote device to obtain link selection result information according to indication information, and to send the link selection result information to an access stratum AS stratum, so that the AS stratum determines, based on the link selection result information, whether to establish an access network link to the network-side device by using the relay device; or
a determining unit 1520, used by the AS stratum to determine, according to the indication information, whether to establish an access network link to the network-side device by using the relay device.

Optionally, the indication information includes at least one of the following:

EMM registration information, internal setting information, communications entity layer status information, and data sending requirement information.

In this embodiment of the present invention, the AS stratum determines a link selection result according to the indication information, or the NAS stratum obtains a link selection result according to the indication information and then sends the link selection result to the AS stratum, so that a link selection manner is more flexible, and service experience of a user can be further improved.

In this embodiment, the remote device 1500 is presented in a form of a unit. The "unit" herein may be an application-specific integrated circuit (application-specific integrated circuit, ASIC), a processor and a memory that execute one or more software or firmware programs, an integrated logic circuit, and/or another component that can provide the foregoing functions.

It may be understood that, functions of the functional units of the remote device 1500 in this embodiment may be specifically implemented based on the method in the foregoing method embodiment. For a specific implementation process, refer to related descriptions in the foregoing method embodiment. Details are not described herein again.

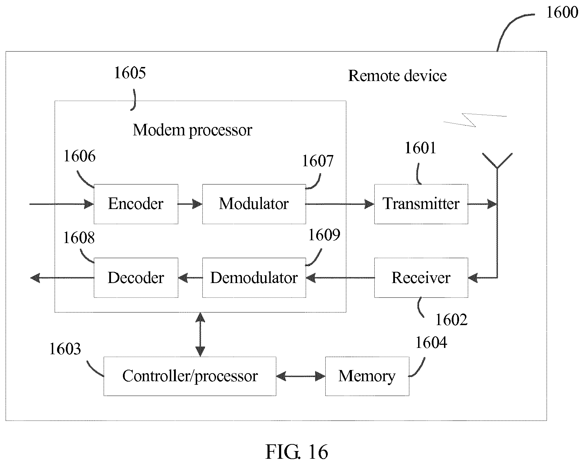

FIG. 16 is a schematic structural diagram of another remote device according to an embodiment of the present invention. As shown in FIG. 16, the remote device 1600 includes:
a transmitter 1601, a receiver 1602, and a processor 1603. The processor 1603 may also be a controller, and is indicated as a "controller/processor 1603" in FIG. 16. Optionally, the relay device 1600 may further include a modem processor 1605, and the modem processor 1605 may include an encoder 1606, a modulator 1607, a decoder 1608, and a demodulator 1605.

In an example, the transmitter 1601 adjusts (such as, through analog conversion, filtering, amplification, and up-conversion) the output sampling and generates an uplink signal. The uplink signal is transmitted to the base station in the foregoing embodiments by an antenna. On a downlink, the antenna receives a downlink signal transmitted by the base station in the foregoing embodiments. The receiver 1602 adjusts (such as, through filtering, amplification, down-conversion, and digitization) a signal received from the antenna and provides input sampling. In the modem processor 1605, the encoder 1606 receives service data and a signaling message that are to be sent on an uplink, and processes (such as, through formatting, coding, and interleaving) the service data and the signaling message. The modulator 1607 further processes (such as, through symbol mapping and modulation) the encoded service data and the encoded signaling message, and provides output sampling. The demodulator 1609 processes (such as, through demodulation) the input sampling and provides symbol estimation. The decoder 1608 processes (such as, through de-interleaving and decoding) the symbol estimation and provides the decoded data and the decoded signaling message that are sent to the relay device 1600. The encoder 1606, the modulator 1607, the demodulator 1609, and the decoder 1608 may be implemented by the composite modem processor 1605. These units perform processing based on a radio access technology (such as an access technology in LTE and another evolved system) used by a radio access network. It should be noted that when the relay device 1600 does not include the modem processor 1605, the foregoing functions of the modem processor 1605 may also be completed by the processor 1603.

The processor 1603 controls and manages an action of the relay device 1600, and is configured to perform a processing process performed by the relay device 1600 in the foregoing embodiment of the present invention. For example, the processor 1603 is further configured to perform corresponding steps in the foregoing method embodiment, and/or another process in the technical solution described in this application.

Further, the relay device 1600 may further include a memory 1604. The memory 1604 is configured to store program code and data that are used by the relay device 1600.

The embodiments of the present invention further provide a computer storage medium. The computer storage medium may store a program, and when the program is executed, at least some or all of the steps of a transmission method of any quality parameter recorded in the foregoing method embodiments may be performed.

It should be noted that, to make the description brief, the foregoing method embodiments are expressed as a series of actions. However, persons skilled in the art should appreciate that the present invention is not limited to the described action sequence, because according to the present invention, some steps may be performed in other sequences or performed simultaneously. In addition, persons skilled in the art should also appreciate that all the embodiments described in the specification are example embodiments, and the related actions and modules are not necessarily mandatory to the present invention.

In the foregoing embodiments, the description of each embodiment has respective focuses. For a part that is not described in detail in an embodiment, refer to related descriptions in other embodiments.

In the several embodiments provided in this application, it should be understood that the disclosed apparatus may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or some of the technical solutions may be implemented in the form of a software product. The software product is stored in a storage medium and includes several instructions for instructing a computer device (which may be a personal computer, a server, or a network device) to perform all or some of the steps of the methods described in the embodiments of the present invention. The foregoing storage medium includes: any medium that can store program code, such as a USB flash drive, a read-only memory (ROM, Read-Only Memory), a random access memory (RAM, Random Access Memory), a removable hard disk, a magnetic disk, or an optical disc.

The foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of the embodiments of the present invention.

## Claims

1. A link establishment method, wherein the method comprises:
receiving, by a relay device over a stub link between the relay device and a remote device, a first access network protocol layer 2 message sent by the remote device, wherein the first access network protocol layer 2 message is used to indicate that the remote device requests to establish an access network link between a network-side device and the remote device;
correspondingly generating a second access network protocol layer 2 message based on the first access network protocol layer 2 message, and sending the second access network protocol layer 2 message to the network-side device, wherein the second access network protocol layer 2 message is used to request the network-side device to establish the access network link;
receiving a third access network protocol layer 2 message that is returned by the network-side device in response to the second access network protocol layer 2 message, wherein the third access network protocol layer 2 message comprises configuration information of a radio bearer between the remote device and the network-side device; and
correspondingly generating a fourth access network protocol layer 2 message based on the third access network protocol layer 2 message, and sending the fourth access network protocol layer 2 message to the remote device.

2. The method according to claim 1, wherein the first access network protocol layer 2 message comprises first indication information, the first indication information is used to identify the remote device, and the first indication information comprises at least one of the following information:
an identifier of the remote device, a service type of the remote device, a group attribute of the remote device, and a device type or a device level of the remote device.

3. The method according to claim 1 or 2, wherein before the correspondingly generating a second access network protocol layer 2 message based on the first access network protocol layer 2 message, the method further comprises:
obtaining, by the relay device, the first indication information in the first access network protocol layer 2 message or stub radio link information, wherein the stub radio link information comprises time domain or frequency domain physical information used to identify the remote device, a radio link identifier used to identify the remote device, and radio link protocol layer entity identifier information used to identify the remote device.

4. The method according to any one of claims 1 to 3, wherein the second access network protocol layer 2 message comprises second indication information, and the second indication information is used to indicate, to the network-side device, the remote device corresponding to the second access network protocol layer 2 message or indicate that the second access network protocol layer 2 message is used by the remote device to request the network-side device to establish the access network link.

5. The method according to any one of claims 1 to 4, wherein the third access network protocol layer 2 message comprises third indication information, and the third indication information is used to enable the relay device to determine the remote device corresponding to the configuration information of the radio bearer.

6. The method according to any one of claims 1 to 5, wherein the second access network protocol layer 2 message and/or the third access network protocol layer 2 message are/is sent by using a signaling radio bearer or a data radio bearer between the relay device and the network-side device.

7. The method according to any one of claims 1 to 6, wherein the method further comprises:
obtaining, by the relay device, one or more cell temporary radio identifiers from the network-side device, so that the relay device allocates one of the one or more cell temporary radio identifiers to the remote device.

8. A link establishment method, wherein the method comprises:
receiving, by a network-side device, a second access network protocol layer 2 message sent by a relay device, wherein the second access network protocol layer 2 message is used to request the network-side device to establish an access network link between the network-side device and a remote device; and
sending a third access network protocol layer 2 message to the relay device in response to the second access network protocol layer 2 message, wherein the third access network protocol layer 2 message comprises configuration information of a radio bearer between the remote device and the network-side device.

9. The method according to claim 8, wherein the third access network protocol layer 2 message comprises third indication information, and the third indication information is used to enable the relay device to determine the remote device corresponding to the configuration information of the radio bearer.

10. The method according to claim 8 or 9, wherein the method further comprises:
sending, by the network-side device, one or more cell temporary radio identifiers to the relay device, so that the relay device allocates one of the one or more cell temporary radio identifiers to the remote device.

11. A link establishment method, wherein the method comprises:
receiving, by a remote device, a first access network protocol layer 2 message to a relay device over a stub link between the remote device and the relay device, wherein the first access network protocol layer 2 message is used to indicate that the remote device requests to establish an access network link between a network-side device and the remote device; and
receiving a fourth access network protocol layer 2 message returned by the network-side device, wherein the fourth access network protocol layer 2 message is correspondingly generated based on a third access network protocol layer 2 message, and the third access network protocol layer 2 message comprises configuration information of a radio bearer between the remote device and the network-side device.

12. The method according to claim 11, wherein the method further comprises: obtaining, by the remote device, a cell temporary radio identifier of the remote device by using the fourth access network protocol layer 2 message, wherein the fourth access network protocol layer 2 message comprises the cell temporary radio identifier.

13. A link selection method, wherein the method comprises:
obtaining, by a non-access stratum NAS stratum of a remote device, link selection result information according to indication information, and sending the link selection result information to an access stratum AS stratum, so that the AS stratum determines, based on the link selection result information, whether to establish an access network link to the network-side device by using the relay device; or
determining, by the AS stratum according to the indication information, whether to establish an access network link to the network-side device by using the relay device.

14. The method according to claim 13, wherein the indication information comprises at least one of the following information:
EMM registration information, internal setting information, communications entity layer status information, and data sending requirement information.

15. A relay device, wherein the relay device comprises:
a receiving unit, configured to receive, over a stub link between the relay device and a remote device, a first access network protocol layer 2 message sent by the remote device, wherein the first access network protocol layer 2 message is used to indicate that the remote device requests to establish an access network link between a network-side device and the remote device; and
a generation unit, configured to: correspondingly generate a second access network protocol layer 2 message based on the first access network protocol layer 2 message, and send the second access network protocol layer 2 message to the network-side device, wherein the second access network protocol layer 2 message is used to request the network-side device to establish the access network link; wherein
the receiving unit is further configured to receive a third access network protocol layer 2 message that is returned by the network-side device in response to the second access network protocol layer 2 message, wherein the third access network protocol layer 2 message comprises configuration information of a radio bearer between the remote device and the network-side device; and
the generation unit is further configured to: correspondingly generate a fourth access network protocol layer 2 message based on the third access network protocol layer 2 message, and send the fourth access network protocol layer 2 message to the remote device.

16. The relay device according to claim 15, wherein the first access network protocol layer 2 message comprises first indication information, the first indication information is used to identify the remote device, and the first indication information comprises at least one of the following information:
an identifier of the remote device, a service type of the remote device, a group attribute of the remote device, and a device type or a device level of the remote device.

17. The relay device according to claim 15 or 16, wherein the relay device further comprises:
an obtaining unit, configured to obtain the first indication information in the first access network protocol layer 2 message or stub radio link information, wherein the stub radio link information comprises time domain or frequency domain physical information used to identify the remote device, a radio link identifier used to identify the remote device, and radio link protocol layer entity identifier information used to identify the remote device.

18. The relay device according to any one of claims 15 to 17, wherein the second access network protocol layer 2 message comprises second indication information, and the second indication information is used to indicate, to the network-side device, the remote device corresponding to the second access network protocol layer 2 message or indicate that the second access network protocol layer 2 message is used by the remote device to request the network-side device to establish the access network link.

19. The relay device according to claim 18, wherein the second indication information comprises a data type of the second access network protocol layer 2 message and at least one of the following messages:
the identifier of the remote device, an identifier of the stub link between the relay device and the remote device, and a relay protocol processing entity identifier corresponding to the remote device.

20. The relay device according to any one of claims 15 to 19, wherein the third access network protocol layer 2 message comprises third indication information, and the third indication information is used to enable the relay device to determine the remote device corresponding to the configuration information of the radio bearer.

21. The relay device according to any one of claims 15 to 20, wherein the third indication information comprises the data type of the second access network protocol layer 2 message and at least one of the following messages:
the identifier of the remote device, the identifier of the stub link between the relay device and the remote device, and the relay protocol processing entity identifier corresponding to the remote device.

22. The relay device according to any one of claims 15 to 21, wherein the second access network protocol layer 2 message and/or the third access network protocol layer 2 message are/is sent by using a signaling radio bearer or a data radio bearer between the relay device and the network-side device.

23. The relay device according to any one of claims 15 to 22, wherein the obtaining unit is further configured to obtain one or more cell temporary radio identifiers from the network-side device, so that the relay device allocates one of the one or more cell temporary radio identifiers to the remote device.

24. A network-side device, wherein the network-side device comprises:
a receiving unit, configured to receive a second access network protocol layer 2 message sent by a relay device, wherein the second access network protocol layer 2 message is used to request the network-side device to establish an access network link between the network-side device and a remote device; and
a sending unit, configured to send a third access network protocol layer 2 message to the relay device in response to the second access network protocol layer 2 message, wherein the third access network protocol layer 2 message comprises configuration information of a radio bearer between the remote device and the network-side device.

25. The network-side device according to claim 24, wherein the third access network protocol layer 2 message comprises third indication information, and the third indication information is used to enable the relay device to determine the remote device corresponding to the configuration information of the radio bearer.

26. The network-side device according to claim 24 or 25, wherein the sending unit is further configured to send one or more cell temporary radio identifiers to the relay device, so that the relay device allocates one of the one or more cell temporary radio identifiers to the remote device.

27. A remote device, wherein the remote device comprises:
a sending unit, configured to send a first access network protocol layer 2 message to a relay device over a stub link between the remote device and the relay device, wherein the first access network protocol layer 2 message is used to indicate that the remote device requests to establish an access network link between a network-side device and the remote device; and
a receiving unit, configured to receive a fourth access network protocol layer 2 message returned by the network-side device, wherein the fourth access network protocol layer 2 message is correspondingly generated based on a third access network protocol layer 2 message, and the third access network protocol layer 2 message comprises configuration information of a radio bearer between the remote device and the network-side device.

28. The remote device according to claim 27, wherein the remote device further comprises:
an obtaining unit, configured to obtain a cell temporary radio identifier of the remote device by using the fourth access network protocol layer 2 message, wherein the fourth access network protocol layer 2 message comprises the cell temporary radio identifier.

29. A remote device, wherein the remote device comprises:
a sending unit, used by a non-access stratum NAS stratum of the remote device to obtain link selection result information according to indication information, and to send the link selection result information to an access stratum AS stratum, so that the AS stratum determines, based on the link selection result information, whether to establish an access network link to the network-side device by using the relay device; or
a determining unit, used by the AS stratum to determine, according to the indication information, whether to establish an access network link to the network-side device by using the relay device.

30. The remote device according to claim 29, wherein the indication information comprises at least one of the following information:
EMM registration information, internal setting information, communications entity layer status information, and data sending requirement information.
